# EUROPÄISCHE PATENTSCHRIFT

(11) **EP 2 929 503 B1**
(45) Veröffentlichungstag und Bekanntmachung des Hinweises auf die Patenterteilung: **26.10.2016**
(21) Anmeldenummer: 14700304.0
(22) Anmeldetag: 10.01.2014
(51) Int. Cl.: G06T 3/40

(54) **VERFAHREN UND VORRICHTUNG ZUR ERZEUGUNG EINES VERBESSERTEN FARBBILDES MIT EINEM SENSOR MIT FARBFILTER**
METHOD AND DEVICE FOR CREATING AN IMPROVED COLOUR IMAGE WITH A SENSOR WITH A COLOUR FILTER
PROCÉDÉ ET DISPOSITIF PERMETTANT DE CRÉER UNE IMAGE COULEUR AMÉLIORÉE AU MOYEN D'UN CAPTEUR AVEC UN FILTRE DE COULEUR

(30) Priorität: 10.01.2013 DE 102013000301
(43) Veröffentlichungstag der Anmeldung: 14.10.2015
(73) Patentinhaber: Basler AG, 22926 Ahrensburg (DE)
(72) Erfinder: KUNZE, Jörg, 22926 Ahrensburg (DE)
(74) Vertreter: Ungerer, Olaf
(86) Internationale Anmeldenummer: PCT/EP2014/050408
(87) Internationale Veröffentlichungsnummer: WO 2014/108512

(56) Entgegenhaltungen:
- US-A1- 2008 252 759
- US-A1- 2010 310 162

## Beschreibung

### Erfindungsgebiet:

Die Erfindung betrifft eine Vorrichtung und ein Verfahren zur Bilderzeugung mittels einer Kamera, insbesondere eine digitale Industriekamera, mit einem Sensor mit Farbfilter.

### Hintergrund der Erfindung:

Im industriellen Umfeld werden vielfach digitale Kameras eingesetzt, um z.B. Produktionsprozesse, Maschinen oder Objekte zu überwachen. Solche Industrie-kameras werden für einfache Überwachungsaufgaben und für messtechnische Aufgabenstellungen wie bspw. Qualitätskontrolle mittels Bildverarbeitung eingesetzt. Sie zeichnen sich durch ihre Integrierbarkeit in Anlagen und hohe Bildqualität aus.

Als Bayer-Sensor bezeichnet man einen Bildsensor, der - ähnlich einem Schachbrett - mit einem Farbfilter überzogen ist, welcher meist zu 50 % aus Grün und je 25 % aus Rot und Blau besteht. Dabei wird berücksichtigt, dass das menschliche Auge auf Grün empfindlicher reagiert als auf andere Farben. Nach dem Konzept der Bayer-Matrix (engl. *Bayer-Pattern*) arbeiten viele herkömmliche CCD-Sensoren in digitalen Foto- und Filmkameras. Die "Bayer-Matrix" oder "Bayer-Filter" ist nach ihrem Erfinder Bryce E. Bayer benannt und in der US 3,971,065 näher erläutert.

Die lichtempfindlichen Zellen auf dem Halbleitermaterial eines Bildsensors können nur Helligkeitswerte erfassen. Um Farbinformationen zu erhalten, wird vor jeder einzelnen Zelle ein winziger Farbfilter in einer der drei Grundfarben Rot, Grün oder Blau aufgebracht. Die Filter sind beispielsweise in den ungeraden Zeilen in der Folge Grün-Rot-Grün-Rot und in den geraden Zeile in der Folge Blau-Grün-Blau-Grün aufgebracht. Jede mit einem solchen Filter versehene, lichtempfindliche Zelle (Pixel) des Bildsensors liefert entsprechend nur Informationen für eine einzige Farbkomponente an dieser Stelle. Für ein vollständiges Farbbild ist hingegen für jeden Pixel ein Farbwert vonnöten, der aus mehreren Farbkomponenten, beispielsweise Rot, Grün und Blau, besteht. Soll ein vollständiges Farbbild mit denselben Abmessungen und mit derselben Auflösung erzeugt werden, so ist es erforderlich, die fehlende Farbinformation aus Werten der benachbarten Pixel zu interpolieren. Somit werden 50% der Grünwerte eines Farbbildes errechnet, bei Blau und Rot sind es jeweils 75 % der Farbwerte (oder in einer Zeile 50 % und in der Folgezeile 100 % der Zeile), die durch Berechnung gefüllt werden müssen. Bei der Farbinterpolation geht man häufig davon aus, dass es im Bild zwischen zwei benachbarten Pixeln nur zu geringen Farbunterschieden kommt. Dies muss natürlich nicht auf jedes Bildmotiv zutreffen. Daher besitzt der Bayer-Sensor unter der Betrachtung eines artefaktfreien Farbbildes streng genommen nur ein Viertel der scheinbaren Auflösung.

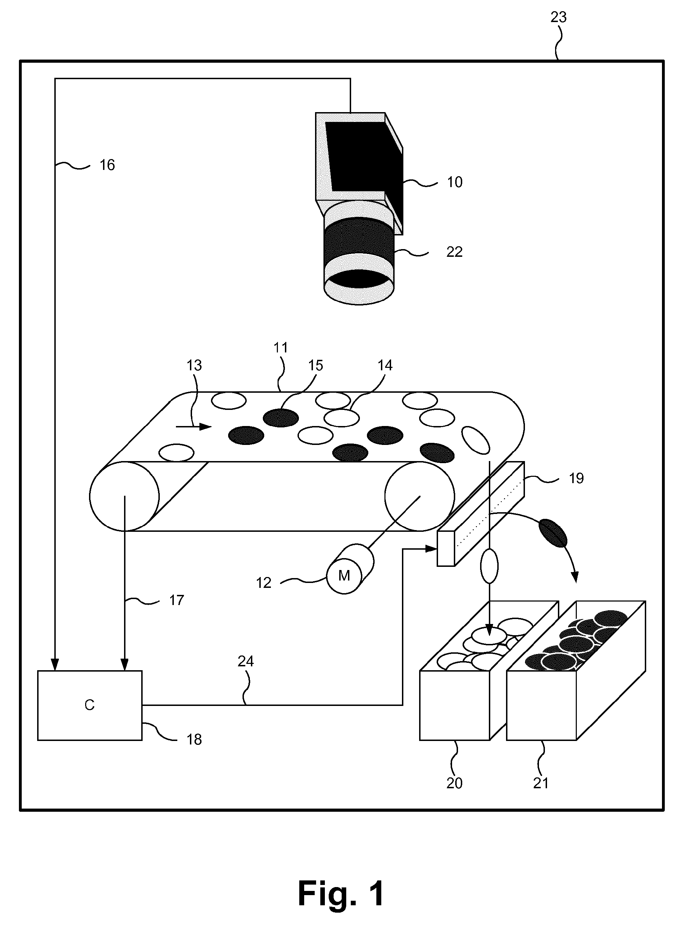

Fig. 1 zeigt eine beispielhafte Anwendung einer digitalen Industriekamera. Digitale Industriekameras 10 sind für den Einbau in eine industrielle Vorrichtung 23 bestimmt, als deren Bestandteil sie Bilder von Objekten 14, 15 oder beispielsweise Personen erfassen. Diese Bilder werden als Bilddaten 16 übermittelt, damit sie bewertet werden und/oder archiviert werden können. Die Bewertung erfolgt häufig automatisiert durch eine Bildverarbeitungseinrichtung 18. Im Ansprechen auf die Bewertungsergebnisse werden häufig automatisierte Aktionen ausgeführt, die im Kontext der Vorrichtung 23 stehen. So werden beispielsweise in ihrer Farbe unterscheidbare helle Objekte 14 und dunkle Objekte 15 automatisch anhand optischer Kriterien sortiert. Solche Sortierungen sind in verschiedensten Branchen gebräuchlich. Beispielsweise werden Lebensmittel, z.B. Getreidekörner nach dem Kriterium der Fleckenfreiheit sortiert, Erz- und Gesteinsbrocken anhand ihrer Farbe oder ihrer Helligkeit, Postsendungen anhand der auf ihnen angebrachten Adresse, Bremsscheiben und Dichtungsringe anhand der Einhaltung einer korrekten Form und dem Einhalten bestimmter Sollmaße oder leere Pfandflaschen anhand einer korrekten Form und des darauf aufgebrachten Barcodes. Solche Sortierungen dienen häufig der Qualitätsprüfung und -sicherung.

Solche industrielle Vorrichtungen 23 besitzen häufig Antriebskomponenten, die die Objekte 14, 15 zuführen, z.B. ein Förderband 11 mit einem Antriebsmotor 12 und einer Transportgeschwindigkeit 13. Die Kamera 10 nimmt an einer geeigneten Stelle mittels einer Optik 22, z.B. ein Objektiv, das Bild auf. Dabei kann die Kamera 10 als Flächenkamera, als Zeilenkamera oder als mehrzeilige Kamera ausgebildet sein, wie dies z.B. in EP 1 919 197 A2 beschrieben ist. Die Kamera übermittelt Bildsignale 16 des aufgenommenen Bilds an die Bildverarbeitungseinrichtung 18 (z.B. einen Computer (C)). Weiterhin kann der Bildverarbeitungseinrichtung 18 ggf. eine Information 17 über eine Transportgeschwindigkeit 13 des Förderbands 11 zugeführt werden, die z.B. mittels eines Drehgebers ermittelt werden kann. Dadurch kann die Bildverarbeitungseinrichtung einen geeigneten Zeitpunkt bestimmen, in dem ein Objekt einen Aktuator 19 passiert, beispielsweise ein Element mit zahlreichen steuerbaren Luftdüsen vorbei fällt, und kann diesem ein Steuersignal 24 zuführen, anhand dessen eine Aktion ausgeführt wird, die geeignet ist, das entsprechende Objekt einer Sortierung zuzuführen. Beispielsweise kann über das Steuern der Luftdüsen vorgegeben werden, ob das Objekt bei abgeschaltetem Luftstrom in einen ersten Behälter 20 fällt oder bei eingeschaltetem Luftstrom in einen zweiten Behälter 21 abgelenkt wird.

In einer solchen Anwendung ist es vorteilhaft, wenn die Kamera 10 das Bild möglichst schnell übermitteln kann, damit die Bildverarbeitungseinrichtung 18 möglichst schnell das Steuersignal 24 für den Aktuator 19 erzeugen kann und damit möglichst frühzeitig die gewünschte Steueraktion einleiten kann. Dadurch kann die Vorrichtung 23 schneller betrieben werden. In bestimmten Anwendungsfällen, insbesondere wenn sich die Objekte 14 und 15 auf dem Förderband 11 bewegen, z.B. rollen, kann eine höhere Genauigkeit oder Präzision erreicht werden oder andere Parameter können optimiert werden.

In anderen Anwendungsfällen kann auch das Aufnehmen und/oder die Dokumentation eines Sachverhalts von Interesse sein. So werden beispielsweise Bilder von Fahrzeugen aufgenommen, die sich im Straßenverkehr ordnungswidrig bewegen, z.B. beim Übertreten der Geschwindigkeit oder beim Überfahren roter Ampeln - wie beispielsweise in der DE 10 2010 003 039 A1 beschrieben ist. Beispielsweise werden auch beim Be- und Entladen von Fähren Bilder von Fahrzeugen aufgenommen, um bei Schadensersatzforderungen feststellen zu können, ob sich der Schaden auf der Fähre ereignet hat. Bei solchen Anwendungen ist es erforderlich, dass die Farbe der Objekte und bestimmter Sachverhalte, z.B. roter Ampeln, korrekt wiedergegeben wird. Weiterhin ist es wichtig, dass das Bild eine gute Qualität hat. Dies ist unter anderem der Fall, wenn die Objekte auf dem Bild gut erkannt werden können und beispielsweise Schrift, insbesondere solche mit schwarzen und weißen Kontrasten, scharf und gut lesbar wiedergegeben wird.

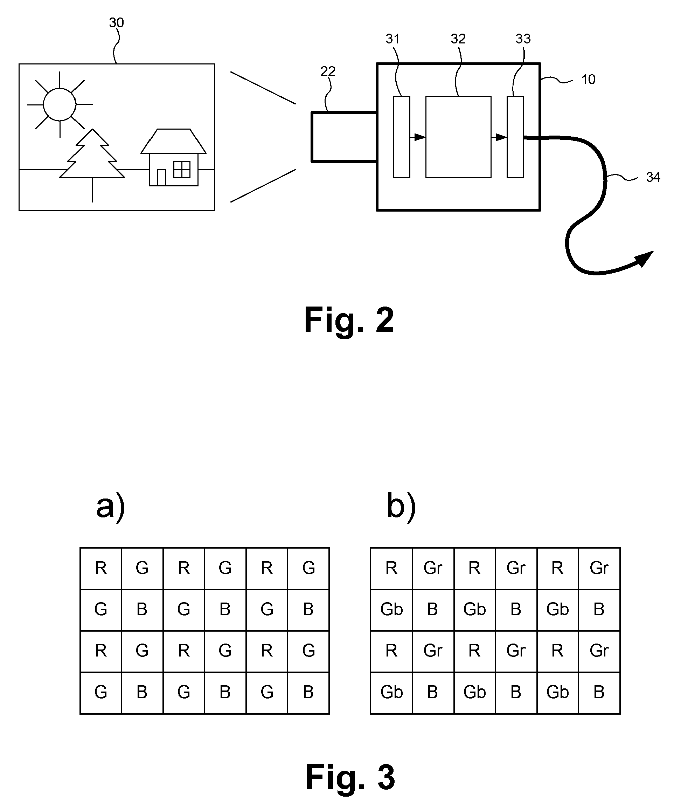

Fig. 2 zeigt eine schematische Darstellung eines Aufbaus einer digitalen Kamera 10 mit einem Objektiv 22. Eine Bildszene 30 wird über das Objektiv 22 auf einen Bildsensor 31 abgebildet, welcher eine regelmäßige Anordnung lichtempfindlicher Elemente (Pixel) aufweist. Der Bildsensor 31 übermittelt elektronische Daten an eine zumeist in der Kamera 10 befindliche Recheneinheit 32, die beispielsweise einen Prozessor, einen digitalen Signalprozessor (DSP) oder ein sogenanntes Field Programmable Gate Array (FPGA) beinhaltet. Es kann dabei erforderlich sein, analoge Bilddaten in digitale Bilddaten z.B. mittels eines Analog-Digital-Konverters (AD-Wandler) zu konvertieren. In der Recheneinheit werden die Bilddaten in eine vom Nutzer verwendbare Form umgewandelt und anschließend über eine Schnittstelle (Interface) 33 als elektronisches Signal 34 ausgegeben.

Ein Benutzer einer solchen digitalen Farbkamera möchte häufig ein Farbbild nutzen, bei dem für jede Pixelposition ein vollständiger Farbwert vorliegt. Als ein solcher Farbwert wird dabei eine Position oder Lage in einem Farbraum verstanden, wobei die Definition der Lage im dreidimensionalen Farbraum durch Angabe von zumeist drei Komponenten geschieht. Die meisten gebräuchlichen Farbräume sind dreidimensional, beispielsweise der RGB-, der sRGB-, der XYZ-, der YUV- und der L*a*b*-Farbraum. Farbwerte eines Farbraums können in Farbwerte eines anderen Farbraums umgerechnet werden, siehe z.B. A. Koschan und M. Abidi: "Digital Color Image Processing", John Wiley & Sons, Hoboken 2008, ISBN 978-0-470-14708-5. Weiterhin sind Methoden bekannt, Farbwerte zu übertragen, z.B. als 8-Bit RGB, 12-Bit RGB oder YUV 4-2-2.

Da jeder Pixel nur für Licht einer Farbe empfindlich ist, also eine eindimensionale Information liefert, ist die Ermittlung eines Farbwertes für diesen Pixel als Wert in einem dreidimensionalen Farbraum unterbestimmt. Üblicherweise erfolgt daher zur Ermittlung der fehlenden Information eine Einbeziehung der Signale benachbarter Pixel, insbesondere solcher Pixel, die Farbmasken mit anderer Farbe aufweisen. Eine entsprechende Berechnung wird als Debayring, Demosaicing oder Color-Filter-Array (CFA) Interpolation bezeichnet und ist beispielsweise in der US 6,181,376 beschrieben. Als Ergebnis des Debayring liegt für jeden Pixel ein mehrdimensionaler Farbwert vor.

Es sind Industriekameras bekannt, in denen ein Debayring vorgenommen wird. Auch gibt es Kameras, die Bilder nicht als Farbwerte, sondern als Rohdaten an einen Computer übertragen. Dann ist es erforderlich, das Debayring im Computer durchzuführen. Hier kann das Debayring bspw. auf einer Einsteckkarte zum Empfang von Bilddaten, einem sogenannten Frame Grabber, erfolgen oder von einem Prozessor des Computers oder der Graphikkarte ausgeführt werden. Es gibt auch Kameras, für die ein sogenannter, als Software implementierter Treiber angeboten wird. Dieser enthält häufig einen Programm-Code zum Ausführen des Debayrings. Es ist bekannt, dass beim Debayring nachteilige Fehlfarben auftreten können, die als Farb-Aliasing bezeichnet werden. Das Problem wird bspw. in der US 20100085452 A ausführlich diskutiert. Ein Vorschlag zur Vermeidung eines solchen Farbaliasing durch ein sogenanntes Anti-Aliasing zu vermeiden ist u.a. in der US 6,819,801 beschrieben.

US 2010/0310162 offenbart eine Bildverarbeitungsvorrichtung zum Verarbeiten von Bilddaten aus einem Bildsensor mit einer regelmäßigen Bildpunktanordnung und einem zugeordneten Farbfilter mit Bayer-Muster, wobei die Bildverarbeitungsvorrichtung ausgestattet ist, Bildverarbeitungsoperationen unter Verwendung von Bilddaten aus einer festen und mehrere Bildpunkte umfassenden Umgebung in Bezug auf einen betrachteten Bildpunkt durchzuführen, wobei die Bildverarbeitungsoperationen ausgestaltet sind, eine Verschiebung des Farbwertes parallel zu einer Unbuntheitsgerade des Farbraumes durch Addition eines identischen Strukturwertes zu sämtlichen Farbkomponenten der Bilddaten durchzuführen.

Für die Leistungsfähigkeit einer digitalen (Industrie-)Kamera sind insbesondere die Geschwindigkeit und die Bildqualität von entscheidender Bedeutung. Letztere wird gemäß der Norm EMVA 1288 (www.emva.org) in der aktuellen Version 3.0 ermittelt. Weiterhin wird vom Anwender als wichtiges Kriterium für die Beurteilung der Bildqualität die subjektive menschliche Wahrnehmung des Bildes herangezogen.

Digitale Industriekameras werden in verschiedenen Branchen eingesetzt, z.B. Lebensmittelindustrie, Logistik, Transport, Automobilindustrie, Robotik und andere. Innerhalb dieser Branchen gibt es weiterhin viele verschiedene Anwendungen mit verschiedenen Anforderungen beispielsweise hinsichtlich der Größe des Bildsensors, der optischen Auflösung, die durch die Anzahl der Pixel gegeben ist, hinsichtlich der Wiederholungsgeschwindigkeit, die in Bildern pro Sekunde (fps) gemessen wird und hinsichtlich des Datenübertragungsformats, z.B. gemäß der Normen CameraLink, IEEE 1394, GigE Vision oder USB. Es gibt digitale Industriekameras, die hohe Datenraten erzielen, wie z.B. bei CameraLink bis zu 800 MByte pro Sekunde oder bei GigE Vision bis 100 MByte pro Sekunde. Um bei einer solchen Anforderungsvielfalt eine effiziente Produktion zu gewährleisten, werden solche Kameras oft modular aufgebaut, beispielsweise mit einem Sensormodul mit einem Bildsensor, einem Rechenmodul und einem Schnittstellenmodul mit einer Schnittstelle. Da das Rechenmodul viele verschiedene Sensormodule und Schnittstellenmodule adaptieren soll, ist es hilfreich, wenn es durch Software konfigurierbar ist, wodurch die Typenvielfalt der Rechenmodule und der damit verbundenen Entwicklungs- Fertigungs- und Logistikaufwand reduziert werden kann. Weiterhin ist es notwendig, zur Erzielung der hohen geforderten Datenraten einen hohen Datendurchsatz zu erreichen. Dabei wird das Rechenmodul häufig durch ein FPGA als zentrales Bauteil realisiert.

Die in einem mathematischen Bildverarbeitungsverfahren enthaltene Anzahl an Operationen sollte möglichst gering sein. Im Falle eines FPGAs führt dies zu einem geringen Verbrauch an Logikzellen, der vorteilhaft ist, um ein kostengünstiges FPGA einsetzen zu können oder mehr freie Logikzellen des FPGAs für andere Funktionen verfügbar zu machen. Im Falle eines DSPs oder eines anderen Prozessors bedeutet eine geringe Anzahl an Operationen, dass diese innerhalb einer gegebenen Zeitspanne auf eine größere Zahl von Pixeln angewandt werden können, wodurch eine Bildausgabe mit größerer Datenrate möglich ist. Durch eine geringere Anzahl an Bildverarbeitungsoperationen kann auch ein leistungsarmer und damit preiswerterer Prozessor eingesetzt werden und somit die Schaltungskomplexität verringert werden.

### Zusammenfassung der Erfindung:

Der Erfindung liegt die Aufgabe zugrunde, eine Kamera mit einem Bayer-Sensor bereitzustellen, die einen geringen Speicherbedarf hat und eine geringe Bandbreite für den Speicherzugriff benötigt, wobei ein qualitativ hochwertiges Bild mit geringer Latenz und hoher Bildschärfe unter Vermeidung von Rauschen und Farb-Aliasing erzeugbar ist.

Diese Aufgabe wird erfindungsgemäß gelöst durch eine Bildverarbeitungsvorrichtung nach Anspruch 1 oder 8, eine Digitalkamera nach Anspruch 11, ein Bildverarbeitungssystem nach Anspruch 12, ein Bildverarbeitungsverfahren nach Anspruch 13 oder 14 und ein Computerprogramm-Produkt nach Anspruch 15.

Dementsprechend ist es durch die erfindungsgemäße Lösung mit dem auf einem monolithischen mathematischen Verfahren beruhenden Bildverarbeitungsprozess möglich, eine Bildverarbeitung mit limitierten Ressourcen auf Grundlage einer einzigen vorbestimmten Umgebung von Bildpunkten durchzuführen, wobei die Addition eines identischen Wertes zu sämtlichen Farbkomponenten zu einer Verschiebung des Farbwertes parallel zur Unbuntheitsgerade des betreffenden Farbraumes führt. Somit kann ein durch die Addition hervorgerufener Rauscheintrag zu keinem nachteiligen Buntrauschen führen, sondern lediglich zu einem unbunten Rauschen.

Ferner führt die geringere Anzahl an Bildverarbeitungsoperationen zu einem geringeren Verbrauch an Logikzellen im FPGA, so dass mehr freie Logikzellen für andere Funktionen verfügbar sind. Im Falle eines DSPs oder eines anderen Prozessors bedeutet eine geringe Anzahl an Operationen, dass diese innerhalb einer gegebenen Zeitspanne auf viele Pixel angewandt werden können, wodurch sich eine höhere Datenrate am Ausgang ergibt.

Gemäß einer ersten vorteilhaften Weiterbildung sind die Bildverarbeitungsoperationen ausgestaltet, basierend auf Bilddaten einer ersten Farbkomponente (z.B. grüne Farbkomponente) der Umgebung einen Korrekturwert zu ermitteln, der mit jeweils unterschiedlichem Vorzeichen zu den Bilddaten einer zweiten und dritten Farbkomponente (z.B. rote und blaue Farbkomponente) addiert wird.

Gemäß einer zweiten vorteilhaften Weiterbildung sind die Bildverarbeitungsoperationen ausgestaltet, den Korrekturwert durch Multiplikation eines durch Faltung der Bilddaten der ersten Farbkomponenten mittels vorbestimmter Faltungsmatrizen ermittelten Wertes mit einem von einer Vorzugsrichtung der Bildstruktur abhängigen Richtungsschätzwert zu ermitteln.

Gemäß einer dritten vorteilhaften Weiterbildung sind die Bildverarbeitungsoperationen ausgestaltet, den Richtungsschätzwert auf Grundlage einer Differenz von Helligkeitsänderungen in horizontaler und vertikaler Richtung innerhalb der Umgebung zu ermitteln.

Gemäß einer vierten vorteilhaften Weiterbildung sind die Bildverarbeitungsoperationen ausgestaltet, aus den Bilddaten einer ersten Farbkomponente in der Umgebung mittels einer Faltungsmatrix eine Strukturinformation dergestalt zu ermitteln, dass die Richtungsabhängigkeit einer Bildstruktur im Vorzeichen codiert ist.

Gemäß einer fünften vorteilhaften Weiterbildung sind die Bildverarbeitungsoperationen ausgestaltet, eine Green-Green-Imbalance durch Verrechnen eines Korrekturterms mit der aus Bilddaten einer ersten Farbkomponente in der Umgebung ermittelten Strukturinformation zu korrigieren.

Gemäß einer sechsten vorteilhaften Weiterbildung sind die Bildverarbeitungsoperationen ausgestaltet, eine erste nichtlineare Funktion mit einem ersten Einstellwert auf eine erste aus Bilddaten einer ersten Farbkomponente in der Umgebung ermittelte Strukturinformation anzuwenden, eine zweite nichtlineare Funktion mit einem zweiten Einstellwert auf eine zweite aus Bilddaten der ersten Farbkomponente in der Umgebung ermittelte Strukturinformation anzuwenden, und die Ergebnisse der ersten und zweiten nichtlinearen Funktionen zu addieren, um eine rauscharme Strukturinformation zu erhalten.

Gemäß einer siebten vorteilhaften Weiterbildung sind die Bildverarbeitungsoperationen ausgestaltet, eine Bildschärfung durch Multiplikation der aus Bilddaten einer ersten Farbkomponente in der Umgebung ermittelten Strukturinformation mit einem Korrekturwert durchzuführen.

### Kurzbeschreibung der Zeichnungsfiguren:

Bevorzugte Ausführungsformen der Erfindung werden im Folgenden anhand der beiliegenden Figuren näher erläutert. Es zeigen:
- Fig.: 1 eine schematische Prinzipdarstellung einer beispielhaften Anwendung einer Industriekamera;
- Fig. 2: einen beispielhaften Aufbau einer digitalen Industriekamera;
- Fig. 3a und 3b: schematische Darstellungen von Bayer-Mustern;
- Fig. 4a und 4b: schematische Schnittbilder von Pixeln mit einer Farbmaske mit einem Bayer-Muster bei unterschiedlicher Pixeldichte;
- Fig. 5: ein Diagramm mit einer Quanteneffizienzkurve eines modernen Farbbildsensors mit Bayer-Muster;
- Fig.: 6 eine schematische Darstellung eines RGB-Farbraums als Würfel;
- Fig.: 7a-7d schematische Darstellungen verschiedener Rauschwolken im RGB-Farbraum;
- Fig. 8: schematische Darstellungen verschiedener Umgebungen eines Pixels;
- Fig. 9: eine Prinzipdarstellung eines progressiven Auslesevorgangs;
- Fig. 10: eine schematische Darstellung zur Erläuterung einer Ausleselatenz;
- Fig. 11: ein schematisches Ablaufdiagramm aufeinanderfolgender umgebungsbezogener Bildverarbeitungsprozesse;
- Fig. 12: ein schematisches Ablaufdiagramm eines monolithischen Bildverarbeitungsprozesses;
- Fig. 13: eine schematische Darstellung der vier Phasenlagen eines Bayer-Musters;
- Fig. 14: ein schematisches Ablaufdiagramm einer Rekonstruktion von Farbkomponenten gemäß einem ersten Ausführungsbeispiel;
- Fig. 15: eine beispielhafte Faltungsmatrix;
- Fig. 16: beispielhafte Faltungsmatrizen zur Bestimmung der Werte R1, G1 und B1 in den Phasenlagen cR, cGr, cGb und cB;
- Fig. 17: beispielhafte Faltungsmatrizen zur Bestimmung des Wertes GS in den Phasenlagen cR, cGr, cGb und cB;
- Fig.: 18a-18d schematische Darstellungen zur Erläuterung des Zustandekommens von Fehlfarben bei kleinen Strukturen;
- Fig. 19: ein schematisches Ablaufdiagramm einer Rekonstruktion von Farbkomponenten mit zusätzlicher Korrektur von Fehlfarben gemäß einem zweiten Ausführungsbeispiel;
- Fig. 20: ein schematisches Ablaufdiagramm einer Rekonstruktion von Farbkomponenten mit Berücksichtigung der Richtung kleiner Strukturen für die Farbkorrektur gemäß einem dritten Ausführungsbeispiel;
- Fig. 21: beispielhafte Faltungsmatrizen zur Bestimmung eines Wertes für AA;
- Fig. 22a-22d: beispielhafte Darstellungen zur Erläuterung der Ermittlung der
a) horizontalen und b) vertikalen Helligkeitsänderung und sich daraus ergebene innere Bereiche für Werte der c) horizontalen und d) vertikalen Helligkeitsänderung;
- Fig. 23: eine beispielhafte Faltungsmatrix für eine Richtungsschätzung;
- Fig. 24: ein Beispiel für einen gemeinsamen Grundfilter;
- Fig. 25: eine schematische Darstellung zur Erläuterung eines Schätzproblems;
- Fig. 26: ein schematisches Ablaufdiagramm einer Rekonstruktion von Farbkomponenten unter Berücksichtigung der Richtung kleiner Strukturen gemäß einem vierten Ausführungsbeispiel;
- Fig. 27: beispielhafte Faltungsmatrizen FGScG, FGScRB und FRBScRB für die Berechnung von GScG, GScRB und RBScRB;
- Fig. 28: ein Beispiel für einen zweiten Grundfilter;
- Fig. 29: ein schematisches Ablaufdiagramm einer Rekonstruktion von Farbkomponenten unter Berücksichtigung der Richtung kleiner Strukturen gemäß einem fünften Ausführungsbeispiel;
- Fig. 30: beispielhafte Faltungsmatrizen zur Ermittlung der Werte R2 und B2 aus den dem mittleren Pixel am nächsten liegenden Werten der jeweiligen Farbe;
- Fig. 31: ein schematisches Ablaufdiagramm einer Rekonstruktion von Farbkomponenten mit verbesserter Bildschärfe gemäß einem sechsten Ausführungsbeispiel;
- Fig. 32: ein schematisches Ablaufdiagramm einer Rekonstruktion von Farbkomponenten mit Denoising gemäß einem siebten Ausführungsbeispiel;
- Fig.: 33a und 33b Diagramme mit nichtlinearen Funktionen zur Reduktion des Rauschens in der Strukturinformation;
- Fig. 34: eine schematische Darstellung eines Beispiels für eine reduzierte Umgebung; und
- Fig. 35: ein Beispiel für einen Grundfilter für eine 9x9-Umgebung.

### Detaillierte Beschreibung der Ausführungsbeispiele:

Gemäß den nachfolgenden Ausführungsbeispielen wird eine digital Industriekamera mit modifizierter und dadurch effektiverer Bildverarbeitung beschrieben.

Als digitale Industriekameras werden sowohl einfarbige Monochromkameras als auch mehrfarbige Farbkameras eingesetzt. Die Aufnahme von Farbbildern erfolgt häufig unter Verwendung eines sogenannten Mosaikfilters mit Bayer-Muster.

Die Figuren 3a und 3b zeigen schematische Darstellungen von Bayer-Mustern. Dabei befindet sich gemäß Fig. 3a auf den Pixeln ein regelmäßiges Muster aus Farbfiltern für die Farben Rot, Grün und Blau, so dass jeder Pixel nur für Licht der jeweiligen Farbe empfindlich ist. Somit liefert der Pixel ein Signal, dass der Stärke der jeweiligen Farbkomponente im eintreffenden Licht entspricht. Pixel mit einem Farbfilter der Farbe Rot werden als Rotpixel (R) bezeichnet, Pixel mit einem Farbfilter der Farbe Grün entsprechend als Grünpixel (G) und Pixel mit einem Farbfilter der Farbe Blau als Blaupixel (B). Die Anzahl der Grünpixel (G) ist beim Bayer-Muster doppelt so hoch, wie jeweils die Anzahl der Rotpixel (R) oder der Blaupixel (B).

Wie in Fig. 3b gezeigt, können die Grünpixel in erste Grünpixel (Gr) und zweite Grünpixel (Gb) unterschieden werden, wobei ohne Beschränkung der Allgemeinheit beispielhaft festgelegt werden kann, dass sich die ersten Grünpixel (Gr) in einer Zeile mit Rotpixeln und die zweiten Grünpixel (Gb) in einer Zeile mit Blaupixeln (B) befinden.

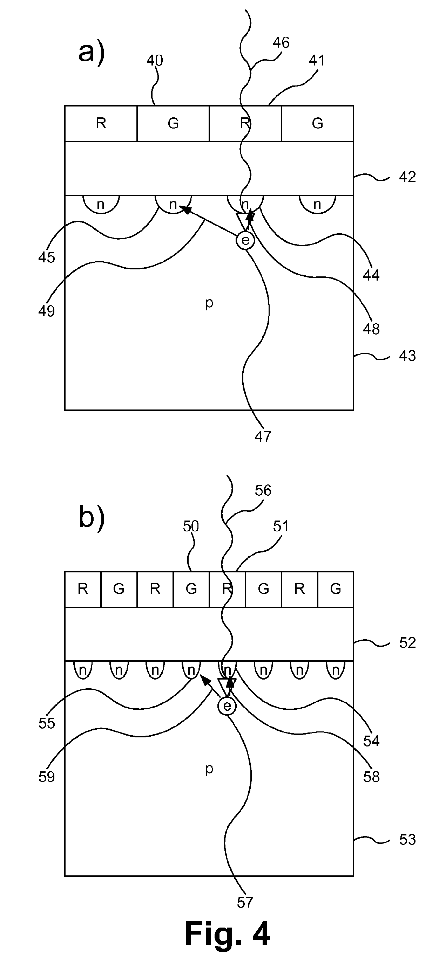

Die Figuren 4a und 4b zeigen schematische Schnittbilder von Pixeln mit einer Farbmaske mit einem Bayer-Muster bei unterschiedlicher Pixeldichte, wobei in Fig. 4b gegenüber Fig. 4a mehr und kleinere Pixel vorhanden sind.

Die in digitalen Industriekameras genutzten Bildsensoren sind im Allgemeinen aus einem Halbleitermaterial 43 in Fig. 4a und 53 in Fig. 4b, zumeist Silizium, aufgebaut. Dieses Halbleitermaterial weist Dotierungen p und n auf, durch die ihm elektronische Eigenschaften verliehen werden. Im Besonderen gibt es Dotierungsbereiche 44, 45 bzw. 54, 55, die ausgestaltet sind, freie Elektronen anzuziehen und zu speichern. Üblicherweise weist jeder Pixel einen solches Dotierungsbereich auf. Über dem Halbleitermaterial befindet sich eine elektrisch isolierende Schicht 42 bzw. 52, in die häufig auch die elektrischen Verbindungen der elektronischen Schaltung eingelagert sind. Darüber wiederum befindet sich eine Schicht mit Farbmasken 40, 41 bzw. 50, 51, die gemäß dem Bayer-Muster bei benachbarten Pixeln unterschiedlich sind. So weist beispielsweise ein Pixel mit einer roten Farbmaske, der hier der Einfachheit halber als Rotpixel bezeichnet wird, einen Dotierungsbereich 44 bzw. 54 und eine rote Farbmaske 41 bzw. 51 auf, während der benachbarte Grünpixel mit dem Dotierungsbereich 45 bzw. 55 eine grüne Farbmaske 40 bzw. 50 aufweist. Fällt nun rotes Licht auf den Sensor, so erfolgt in den grünen Farbfiltern hauptsächlich eine Absorption und in den roten Farbfiltern eine Transmission. Demzufolge kann ein rotes Photon 46 bzw. 56 durch die rote Farbmaske 41 bzw. 51 eines Rotpixels sowie durch die darunter liegende isolierende Schicht 42 bzw. 52 hindurch in die Halbleiterschicht 43 bzw. 53 eindringen und dort ein freies Photoelektron erzeugen 47 bzw. 57 erzeugen. Dieses freie Photoelektron wird durch die in der Nähe befindlichen Dotierungsbereiche 44, 45 bzw. 54, 55 angezogen, wobei die Stärke der Anziehung mit geringerer Entfernung zunimmt, und bewegt sich einer statistischen Wahrscheinlichkeit folgend, die durch die Stärke der verschiedenen Anziehungen und umgekehrt durch die Länge der verschiedenen Entfernungen bestimmt wird, zu einem der Dotierungsbereiche 44 bzw. 54 oder 45 bzw. 55 hin.

Durch die Tatsache, dass pro Bildsensor zunehmend mehr Pixel integriert werden und darüber hinaus die Gesamtfläche der Bildsensoren aus Kostengründen immer kleiner wird, ist die Entfernung ihrer zu den Pixeln gehörenden Dotierungsbereiche 54 und 55 in Fig. 4b kleiner als die der Dotierungsbereiche 44 und 45 in Fig. 4a und auch die Entfernung der Farbmasken 50 und 51 in Fig. 4b ist gegenüber der Entfernung der Farbmasken 40 und 41 in Fig. 4a geringer. Dadurch verringert sich der Abstand des Photoelektrons 57 zum Dotierungsbereich des benachbarten Pixels 55 gegenüber dem des Photoelektrons 47 zum Dotierungsbereich 45. Durch den geringeren Abstand nimmt die Stärke der Anziehung zum benachbarten Pixel zu und gleichzeitig die Länge der Entfernung ab. Dadurch steigt die statistische Wahrscheinlichkeit, dass das durch das rote Licht 58 erzeugte Photoelektron 57 fälschlicherweise zum Dotierungsbereich 55 driftet (Pfeil 59), statt dass es zum korrekten Dotierungsbereich 54 driftet (Pfeil 58), gegenüber dem Vergleichsfall in Fig. 4a, dass das durch das rote Licht 48 erzeugte Photoelektron 47 fälschlicherweise zum Dotierungsbereich 45 driftet (Pfeil 49) statt dass es zum korrekten Dotierungsbereich 44 driftet (Pfeil 48).

Der Effekt, dass Photoelektronen fälschlicherweise zu einem benachbarten Dotierungsbereich driften, wird in Fachkreisen als "Crosstalk" bezeichnet. Ist nun auf den Sensor ein Bayer-Muster aufgebracht, so führt der durch die beiden vorgenannten Trends zunehmende Crosstalk dazu, dass zunehmend mehr Photoelektronen im benachbarten Pixel einer falschen Farbe zugeordnet werden, da im Bayer-Muster ja horizontal oder vertikal benachbarte Pixel stets einen anderen Farbfilter aufweisen. Dadurch ergibt sich eine nachteilige schlechte Farbtrennung.

Es ist eine Materialeigenschaft von Silizium, dass rote Photonen, welche eine relativ große Wellenlänge aufweisen, eine deutlich größere Eindringtiefe haben, als blaue Photonen, welche eine relativ kleine Wellenlänge aufweisen. Dadurch kommt es häufig vor, dass der von Rotpixeln ausgehende Crosstalk bei gleicher Signalstärke häufig größer ausfällt, als der von Blaupixeln ausgehende.

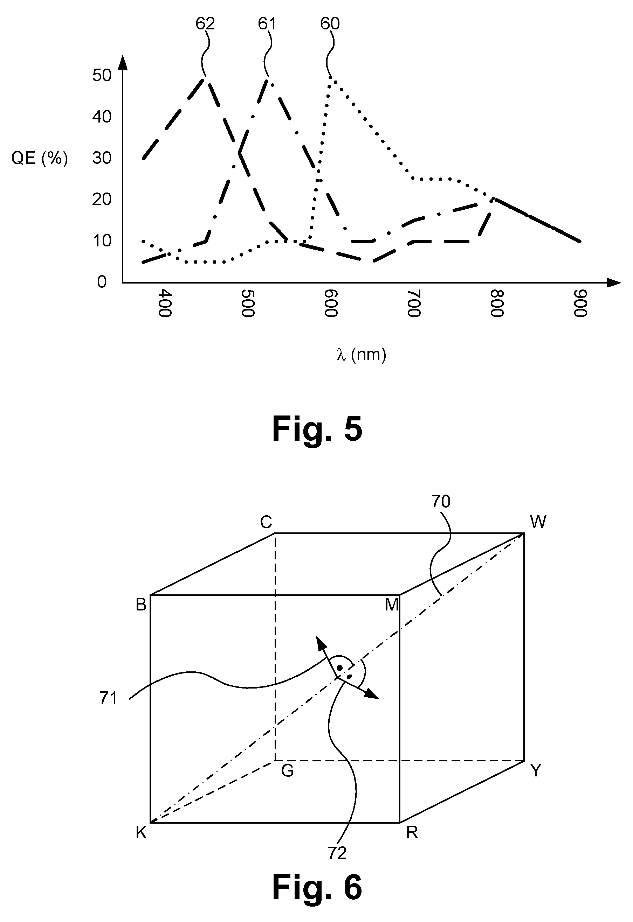

Fig. 5 zeigt ein Diagramm mit einer Quanteneffizienzkurve eines modernen Farbbildsensors mit Bayer-Muster. Im Einzelnen sind die Quanteneffizienz-Kurven (QE) 60, 61 und 62 für rote Pixel, grüne Pixel bzw. blaue Pixel dargestellt. Vergleicht man diese Kurven mit den im CIE-Normvalenzsystem als X, Y und Z beschriebenen Empfindlichkeitskurven für das menschliche Sehen, stellt man insbesondere einen gravierenden Unterschied fest: Die in Fig. 5 gezeigten Kurven weisen für keine Wellenlänge eine Quanteneffizienz von 0 auf. Gemäß CIE Normvalenzsystem sollte jedoch beispielsweise die Quanteneffizienz-Kurve 60 für rote Pixel bei einer Wellenlänge λ von 400 nm und von 500 nm, und die Quanteneffizienzkurve 62 für blaue Pixel bei 600 nm und darüber praktisch null sein. Die Abweichung lässt sich durch die oben genannte schlechte Farbtrennung erklären.

Durch die schlechte Farbtrennung ergeben sich nachteilige Farbfehler, z.B. eine zu geringe Farbsättigung. Diese kann z.B. nach EP2383974B1 oder einem anderen bekannten Verfahren, z.B. mit Hilfe einer technisch gebräuchlichen 3x3 Farbmatrix, korrigiert werden.

Weiterhin ist es je nach der genauen Ausführung des Bildsensors möglich, dass der Crosstalk anisotrop auftritt, es also zwischen in vertikaler Richtung benachbarten Pixeln nicht zum gleichen Anteil an Übersprechen kommt, wie zwischen horizontal benachbarten Pixeln. Hierbei beziehen sich die Begriffe vertikal benachbart und horizontal benachbart auf die Darstellung gemäß Fig. 3.

Wird nun angenommen, dass eine homogen helle, graue Fläche vom Bildsensor mit einem geeigneten Weißabgleich aufgenommen wird. Dann ist, bedingt durch die Farbe Grau, das Signal der Rotpixel etwa gleich dem Signal der Blaupixel. Sind die Grünpixel unabhängig von ihrer Position grundsätzlich baugleich und ist dabei weiterhin der Crosstalk zwischen vertikal benachbarten Pixeln größer, als zwischen horizontal benachbarten Pixeln, und ist bedingt durch die bekannte, größere Eindringtiefe roter Photonen in Silizium verglichen mit blauen Photonen der von Rotpixeln ausgehende Crosstalk größer, als der von Blaupixeln ausgehende Crosstalk, so ergibt sich folgende Situation: Durch den Crosstalk von den Rotpixeln (R) zu den ersten und zweiten Grünpixeln (Gr) und (Gb) wird deren Signal jeweils angehoben. Da der Crosstalk zu vertikal benachbarten Pixeln größer ist als zu horizontal benachbarten Pixeln, wird dabei das Signal der vertikal benachbarten zweiten Grünpixel (Gb) stärker angehoben, als das Signal der horizontal benachbarten ersten Grünpixel (Gr). Ebenso wird durch den Crosstalk von den Blaupixeln (B) zu den vertikal benachbarten ersten Grünpixeln (Gr) deren Signal etwas stärker angehoben, als das der horizontal benachbarten zweiten Grünpixel (Gb), deren Signal schwächer angehoben wird. Da gemäß der Annahme der von Rotpixeln ausgehende Crosstalk größer ist, als der von den Blaupixeln ausgehende, ist in Summe die Anhebung des Signals der zweiten Grünpixel (Gb) stärker als die Anhebung des Signals der ersten Grünpixel (Gr). Dadurch ergibt sich eine Abweichung der Signale der ersten und zweiten Grünpixel (Gr) und (Gb) untereinander, welche als sogenannte "Green-GreenImbalance" bezeichnet wird.

Aus der Norm EMVA 1288 ist bekannt, dass Bilder von Bildsensoren sowie von digitalen Industriekameras ein Rauschen mit dort beschriebenen Eigenschaften aufweisen. Dieses Rauschen wird durch die Anwendung mathematischer Korrekturprozesse, z.B. das Debayring und die Korrektur der Farbfehler, beeinflusst und zumeist verstärkt. Dabei kann das Signal von Pixeln bzw. einen Farbwert als Messwert und das Rauschen als Messfehler aufgefasst werden.

Fig. 6 zeigt eine schematische Darstellung eines RGB-Farbraums als Würfel. Der RGB Farbraum mit seinem komponentenweise beschränkten Wertebereich lässt sich als Würfel darstellen. Die Eckpunkte sind durch Buchstaben gekennzeichnet, wobei K für schwarz, den Ursprung des Farbraums, R für Rot, G für Grün, B für Blau, Y für Gelb, C für Cyan, M für Magenta und W für Weiß verwendet wird. Die Verbindungsgerade von K nach W wird als Unbuntheitsgerade 70 bezeichnet. Auf ihr liegen die Farben Schwarz, Weiß und eine Vielzahl von Grautönen. Weitere Richtungen, die senkrecht zur Unbuntheitsgerade verlaufen, werden als bunte Richtungen 71 und 72 bezeichnet.

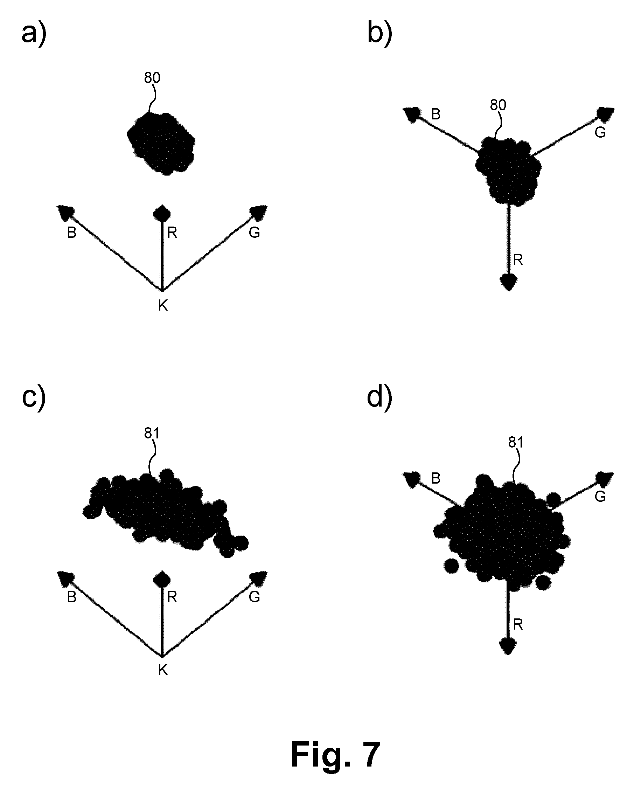

Die Figuren 7a-7d zeigen schematische Darstellungen verschiedener Rauschwolken im RGB Farbraum. Zur Veranschaulichung der Wirkung der Farbkorrektur auf das Rauschen wird ein homogenes, graues Bild mit 64 x 64 Pixeln angenommen, das von einem Bildsensor mit einem Bayer-Muster aufgenommen wird. Dem grauen Bild wird ein über die Farben der Farbfilter gleichbleibendes, normalverteiltes Rauschen überlagert. Das Debayring wird mit Hilfe der häufig verwendeten 2x2-Methode durchgeführt, bei der zur Ermittlung fehlender Werte für fehlende Farben R oder B für einen Pixel jeweils benachbarte Pixel der jeweils fehlenden Farbe nach links oder nach oben oder nach links oben gesucht werden und deren Wert direkt übernommen wird und zur Ermittlung der Werte für G immer ein Mittelwert der beiden grünen Pixel gebildet wird, die sich entweder links und oben oder beim Pixel selbst und oben links befinden. Die dabei erhaltenen Farbwerte 80 werden in einen RGB-Farbraum eingezeichnet, wobei K der schwarze Ursprung ist und R, G und B die Basisvektoren des RGB Farbraumes sind. Fig. 7a und Fig. 7b zeigen zwei verschiedene Ansichten derselben Wolke von Farbwerten. In Fig. 7a schaut der Betrachter aus einer roten Richtung senkrecht auf die Unbuntheitsgerade, während der Betrachter in Fig. 7b parallel zur Unbuntheitsgerade blickt. Der Ursprung K ist dabei von der Wolke der Farbwerte verdeckt.

Auf die in Fig. 7a und 7b gezeigte Wolke aus Farbwerten 80 wird nun eine in der Praxis eingesetzte Farbkorrektur angewandt und somit farblich korrigierte Farbwerte 81 erhalten. Diese sind in den Figuren 7c und 7d auf gleiche Weise dargestellt, wir die Farbewerte 80 in Fig. 7a und 7b, so dass ein direkter Vergleich möglich ist. Die Ausdehnung der Wolken kann hierbei als intuitives Maß für die Stärke des Rauschens aufgefasst werden. Somit ist es von Vorteil, wenn sich eine kleinere Wolke von Farbwerten ergibt, da dies einem kleineren Rauschen entspricht, was zu einer als besser empfundenen Bildqualität führt. Im direkten Vergleich zeigt sich, dass die Wolke der korrigierten Farbwerte 81 besonders in den bunten Richtungen eine erheblich größere Ausdehnung hat, als die Wolke der ursprünglichen Farbwerte 80, was veranschaulicht, dass durch die Farbkorrektur das Buntrauschen auf nachteilige Weise erheblich zugenommen hat.

Es sind mathematische Bildverarbeitungsprozesse bekannt, durch die Bilder digitaler Kameras weichgezeichnet werden können. Durch die Weichzeichnung wird das Rauschen auf vorteilhafte Weise verringert, wodurch aber die Bildschärfe verringert wird. Mathematische Bildverarbeitungsprozesse zur Verringerung des nachteiligen Bildrauschens werden als Denoising bezeichnet.

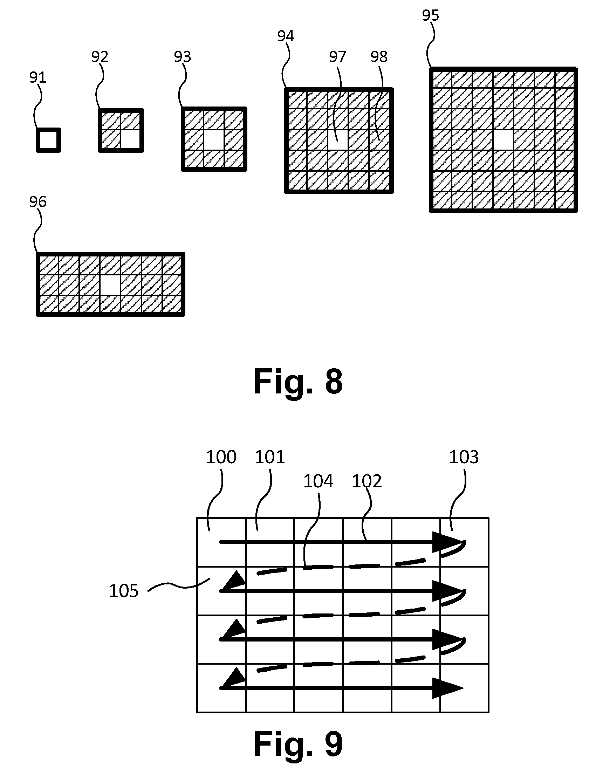

Fig. 8 zeigt schematische Darstellungen verschiedener Umgebungen eines Pixels. Zahlreiche der vorgenannten mathematischen Bildverarbeitungsprozesse benötigen zur Berechnung von Werten für einen zentralen Pixel 97 Werte von umgebenden Pixeln 98. Daher können viele dieser mathematischen Bildverarbeitungsprozesse nicht auf einer 1x1-Umgebung 91 basieren, sondern benötigen eine größere Umgebung, z.B. eine 2x2-Umgebung 92, eine 3x3-Umgebung 93, eine 5x5-Umgebung 94 oder eine 7x7-Umgebung 95. Es sind auch nichtquadratische Umgebungen denkbar, z.B. eine 7x3-Umgebung 96.

Fig. 9 zeigt eine Prinzipdarstellung eines progressiven Auslesevorgangs. Bildsensoren liefern Bilder im Allgemeinen in einer progressiven Form, die auch als progressives Auslesen bezeichnet wird. Dabei werden zunächst in Zeilenrichtung 102 das Signal eines Pixels 100, anschließend das Signal des ihm rechts benachbarten Pixels 101 und so weiter in Leserichtung ausgegeben. Ist der letzte Pixel einer Zeile 103 erreicht, führt das zeilenweise Auslesen einen Sprung 104 zur nächsten Zeile 105 durch und beginnt dort wiederum mit dem ersten Pixel.

Da die meisten der vorgenannten mathematischen Bildverarbeitungsprozesse Umgebungen benötigen, muss der Wert eines Pixels mit Hilfe einer Umgebung berechnet werden, wobei sich der betrachtete Pixel in der Mitte befindet. Zum Aufbau einer solchen Umgebung wird ein Speicher benötigt. Bei progressivem Auslesen müssen in diesem Speicher N-1 vollständige Zeilen gespeichert werden. Zusätzlich wird noch Speicher für N-1 Pixel benötigt. Bei herkömmlichen Bildsensoren ist die Zeilenlänge deutlich größer als N-1, so dass für die Größe des benötigten Speichers vor allem die Anzahl der Zeilen dominierend ist.

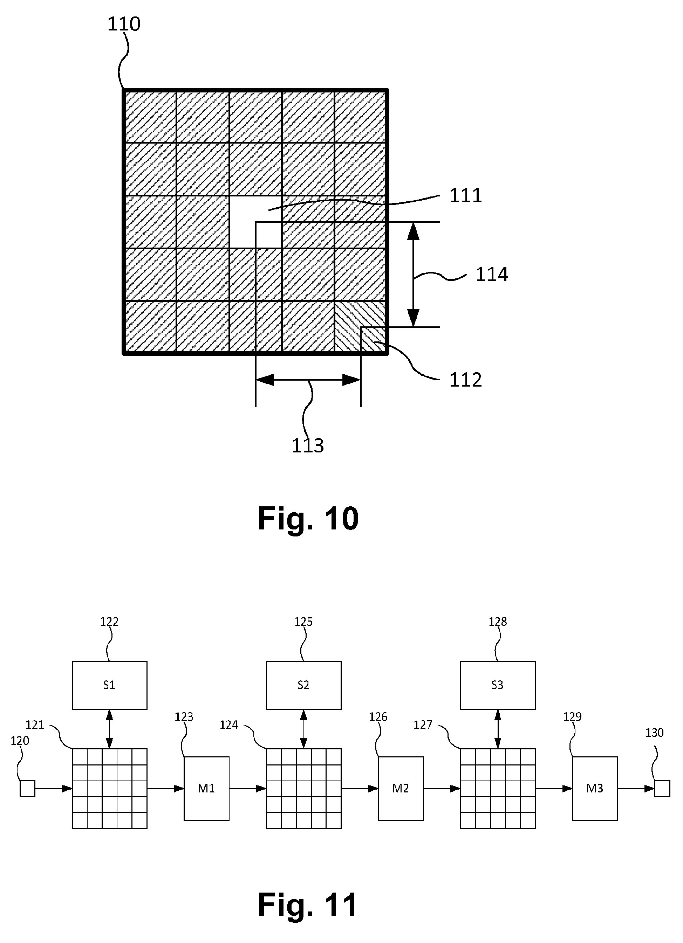

Fig. 10 zeigt eine schematische Darstellung zur Erläuterung einer Ausleselatenz. Wird ein Signal eines Pixels 112 progressiv übermittelt und soll zur Errechnung eines Wertes für diesen Pixel ein mathematischer Bildverarbeitungsprozess eingesetzt werden, der eine Umgebung, beispielsweise eine 5x5-Umgebung 110, benötigt, so ist dies nicht sofort möglich, da die Werte in der gleichen Zeile rechts von dem Pixel 112 sowie alle Werte in den Zeilen unterhalb des Pixels 112 noch nicht zur entsprechend Recheneinheit übermittelt und somit dieser noch nicht bekannt sind. Der am wenigsten weit zurückliegende Pixel, also der Pixel, bei dem die Übermittlung des Signals zeitlich am wenigsten weit zurückliegt und für den nach Übermittlung des Signals des Pixels 112 Signale einer vollständigen 5x5-Umgebung 110 vorliegen, ist der zentrale Pixel 111. Ab dem Zeitpunkt, zu dem der Wert des Pixels 112 bekannt ist, können Werte des zentralen Pixels 111, beispielweise Farbwerte, berechnet und nachfolgend über eine Schnittstelle progressiv übermittelt werden. Das bedeutet, dass die progressive Übermittlung des Ergebnisbildes aus Werten frühestens nach einer horizontalen Latenz 113 plus einer vertikalen Latenz 114 erfolgen kann, wobei die Zeit dieser Latenz sich aus der Datenrate und der Zeilenlänge, sowie der relativen Position des betrachteten Pixels 112 zum zentralen Pixel 111 errechnen lässt. Da es, wie oben beschrieben, vorteilhaft ist, wenn die Ausgabe des Bildes aus der Kamera schnell erfolgt, sollten die horizontale Latenz 113 und die vertikale Latenz 114 jeweils möglichst klein sein. Da die vertikale Latenz 114 bei progressiver Ausgabe des Bildes meist um Größenordnungen größer ist, als die horizontale Latenz 113, sollte vor allem die vertikale Latenz 114 möglichst gering sein.

Die von einer NxN-Umgebung erzeugt vertikale Latenz liegt bei mindestens (N-1)/2 Zeilen und die horizontale Latenz bei (N-1)/2 Pixeln. Im vorgenannten Beispiel wird zum Aufbau der Umgebung 110 weiterhin ein Speicher benötigt, in den das Signal des Pixels 112 abgelegt wird und aus dem die Signale aller anderen Pixel der Umgebung 110 zum Aufbau der Umgebung 110 entnommen werden können. Da das Bild, wie oben dargelegt, aus der digitalen Industriekamera mit einer hohen Datenrate ausgegeben werden soll, muss der Zugriff auf einen solchen Speicher ebenfalls mit einer hohen Datenrate erfolgen können.

Weiterhin sind für die Errechnung eines Werts eines Pixels bei Benutzung einer Umgebung eine Vielzahl von Signalen aus dieser Umgebung erforderlich, beispielsweise 25 Werte im Falle einer 5x5-Umgebung. Von diesen wurde lediglich das Signal des Pixels 112 neu übermittelt, so dass im vorgenannten Beispiel gemäß Fig. 10 24 Werte aus dem Speicher entnommen werden müssen. Das bedeutet, dass die Datenrate für den Zugriff auf den Speicher um ein Vielfaches höher sein muss, als die Datenrate, mit der die digitale Industriekamera das Bild ausgibt. Soll die digitale Industriekamera beispielsweise das Bild mit 100 Millionen (10⁸) Pixel pro Sekunde ausgeben, so sind 10⁸ Werte pro Sekunde zu berechnen, was 10⁸ Schreibvorgänge pro Sekunde in den Speicher und 24x10⁸ = 2.4x10⁹ Lesevorgänge pro Sekunde aus dem Speicher erfordert. Speicher, die eine solche hohe Datenrate für den Zugriff unterstützen, sind naturgemäß klein, also haben eine kleine Speicherkapazität, und sind teuer. Als Beispiele seien hier das sogenannte embedded RAM (Random Access Memory) eines FPGAs oder der Level 1 Cache eines DSPs aufgeführt. Es ist daher vorteilhaft, wenn der verwendete mathematische Bildverarbeitungsprozess einen möglichst geringen Speicherbedarf und eine möglichst geringere Zugriffsdatenrate erfordert. Die Umgebung sollte also möglichst klein gewählt wird.

Fig. 11 zeigt ein schematisches Ablaufdiagramm aufeinanderfolgender umgebungsbezogener Bildverarbeitungsprozesse. Es gibt Bildverarbeitungsvorgänge, bei denen Signale eines Pixels 120 nacheinander verschiedenen mathematische Bildverarbeitungsprozessen 123, 126 und 129 unterzogen werden. Ein erster Prozess (M1) 123 benötigt eine Umgebung 121, die mit Hilfe eines ersten Speichers (S1) 122 aus dem Datenstrom der Signale der Pixel 120 erzeugt wird. Da ein nachgelagerter zweiter Prozess (M2) 126 das Ergebnis des ersten Prozesses 123 dergestalt verwendet, dass eine zweite Umgebung 124 der Pixel der Ergebnisse des ersten Prozesses 123 benötigt wird, muss diese zweite Umgebung 124 mit Hilfe eines zweiten Speichers (S2) 125 erzeugt werden. Ebenso muss eine dritte Umgebung 127 mit Hilfe eines dritten Speichers (S3) 128 aus den Ergebnissen des zweiten Prozesses 126 erzeugt werden, falls ein dritter Prozess (M3) 129 diese benötigt. Auf diese Weise können beliebig viele Prozesse nacheinander ausgeführt werden. Am Ende wird ein Endwert 130 als Ergebnis ausgegeben. Werden die Speicher 122, 125 und 128 als getrennte Bauteile ausgeführt, so erhöht sich die Komplexität der Kamera. Werden die Speicher 122, 125 und 128 in einem einzelnen Bauelement integriert, so muss der zusammengefasste Speicher eine höhere Bandbreite für den Zugriff aufweisen, als dies bei getrennten Speichern erforderlich wäre. Jede weitere Umgebung führt darüber hinaus auch zu einer nachteiligen Erhöhung der eine Latenz von üblicherweise mindestens (N-1)/2 Zeilen und (N-1)/2 Spalten.

In den nachfolgenden Ausführungsbeispielen wird eine digitale Industriekamera mit einem Bildsensor mit einem Bayer-Muster und mit einer Recheneinheit oder einem Frame-Grabber oder einem Computer bereitgestellt, die mit einem monolithischen mathematischen Bildverarbeitungsprozess ausgestattet ist und aus dem Signal des Bildsensors ein qualitativ hochwertiges Farbbild erzeugt, wobei sie besonders wenig Speicherplatz benötigt und einen Speicherzugriff mit besonders niedriger Bandbreite ermöglicht. Das Bild kann mit besonders wenig vertikaler und horizontaler Latenz ausgegeben werden, wobei zur Erzeugung eines qualitativ hochwertigen und rauscharmen Farbbildes ein Debayring erfolgt. Dabei wird Farb-Aliasing und Green-Green-Imbalance bei niedrigem Rauschen (insbesondere niedriges Buntrauschen) und guter Bildschärfe vermieden. eine monolithische mathematische Methode gelöst. Als monolithischer mathematischer Bildverarbeitungsprozess wird dabei ein Prozess verstanden, bei dem alle erforderlichen Bildverarbeitungsprozesse auf einer einzigen Umgebung durchgeführt werden.

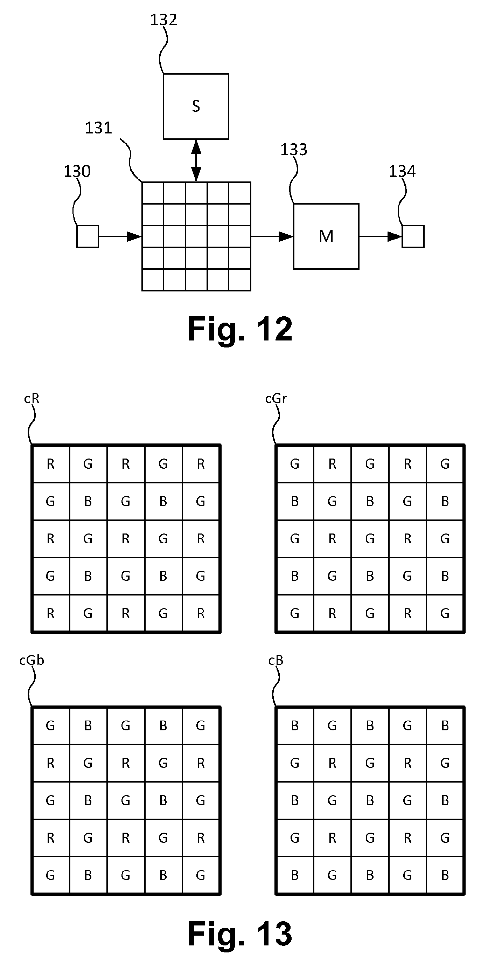

Fig. 12 zeigt ein schematisches Ablaufdiagramm eines monolithischen Bildverarbeitungsprozesses. Dabei wird aus einem Datenstrom aus Signalen eines betrachteten Pixels 130 unter Verwendung eines Speichers (S) 132 genau eine Umgebung 131 aufgebaut. Auf dieser Umgebung 131 werden mittels eines monolithischen mathematischen Prozesses (M) 133, welcher zumindest eine Bildverarbeitung aus Debayring, Anti-Aliasing, Denoising, Schärfen und Korrektur der Green-Green-Imbalance durchführt, Ergebniswerte 134 berechnet. Dadurch kann der Speicherbedarf klein gehalten werden und es wird eine relativ geringe Bandbreite für den Speicherzugriff benötigt, was zu einer geringen Latenz führt. Die Umgebung 131 kann einen quadratischen Umriss aufweisen, also N x N Pixel groß sein. Dadurch ist sie in ihrer Form in horizontaler und vertikaler Richtung spiegelsymmetrisch sowie 90 Grad drehsymmetrisch und ermöglicht eine Anwendung entsprechend symmetrischer Bildverarbeitungsprozesse. Diese wiederum haben den Vorteil, dass im Bild aus den Ergebniswerten keine horizontalen oder vertikalen Vorzugsrichtungen erkennbar sind, welche vom Benutzer als störend empfunden werden können.

Weiterhin kann die NxN-Umgebung 131 so gewählt werden, dass N eine ungerade Zahl ist. Dies hat den Vorteil, dass ein zentraler Pixel 111 vorhanden ist, von dem aus die Umgebung 131 in horizontaler, vertikaler oder diagonaler Richtung dieselbe Anzahl von Pixeln aufweist. Dies hat den Vorteil, dass Berechnungsvorschriften ohne nachteilige Phasenverschiebung verwendet werden können. Auch hat dies den Vorteil, erkennbare Vorzugsrichtungen im Bild aus den Ergebniswerten zu vermeiden.

Fig. 13 zeigt eine schematische Darstellung der vier Phasenlagen eines Bayer-Musters. Es gibt genau vier Phasenlagen des Bayer-Musters bezüglich einer Umgebung. Der Fall, in dem der mittlere Pixel rot (R) ist, wird als "cR" bezeichnet, der Fall, in dem der mittlere Pixel grün (G) und die horizontal benachbarten Pixel rot (R) sind, wird als "cGr" bezeichnet, der Fall, in dem der mittlere Pixel grün (G) und die horizontal benachbarten Pixel blau (B) sind, wird als "cGb" bezeichnet und der Fall, in dem der mittlere Pixel blau (B) ist, wird als "cB" bezeichnet.

Es ist vorteilhaft, die NxN-Umgebung so zu wählen, dass N=5 ist. Wenn N=1 ist, ist ein Debayring nicht möglich, da in einer 1x1-Umgebung nicht alle Farben enthalten sind. Ist N=3 ist, sind in der Umgebung zwar alle Farben enthalten, jedoch gibt es in den Fällen cR und cB eine Farbe, die nur einmal vorkommt. Für ein Debayring mit einem geringen Buntrauschen ist es jedoch vorteilhaft, wenn für jede Farbe mehrere Pixel in der Umgebung enthalten sind, weil dann diese Pixel unter vorteilhafter Reduktion des Rauschens miteinander verrechnet werden können. Dies ist jedoch erst ab einer Umgebungsgröße N=5 möglich. Dies gilt auch für N=7, N=9, N=11 und so weiter. Größere Umgebungen mit N>5 benötigen jedoch einen höheren Speicherbedarf und eine größere Bandbreite für den Zugriff auf den Speicher. Grundsätzlich können die nachfolgenden Ausführungsbeispiele jedoch auch mit größeren Umgebungen realisiert werden.

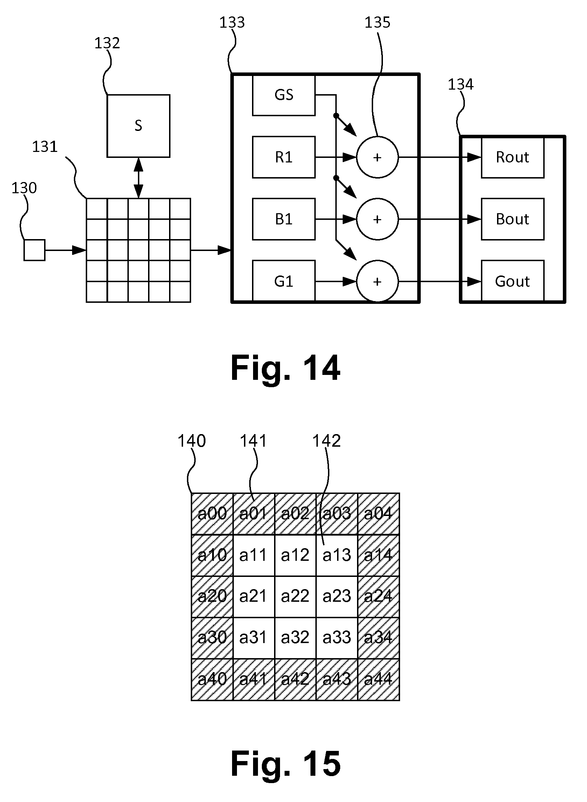

Fig. 14 zeigt ein schematisches Ablaufdiagramm einer Rekonstruktion von Farbkomponenten gemäß einem ersten Ausführungsbeispiel.

Wie oben dargelegt, besteht der Farbwert eines Ergebniswertes 134 aus einem Farbvektor in dem RGB-Farbraum, dessen Komponenten für Rot, Grün und Blau hier als Rout, Gout und Bout bezeichnet werden. Es wird nun vorgeschlagen, dass diese Komponenten durch den monolithischen mathematischen Bildverarbeitungsprozess 133 dergestalt errechnet wird, dass zunächst rauscharme Farbkomponenten R1, G1 und B1 ermittelt werden, zu denen jeweils eine grüne Strukturinformation GS mittels jeweiligen Addierern 135 addiert wird. Durch diese Ausgestaltung ergibt sich aus nachfolgenden Gründen ein niedriges Buntrauschen. Zunächst sind die Farbkomponenten R1, G1 und B1 definitionsgemäß rauscharm. Die Addition eines identischen Wertes GS zu sämtlichen drei Farbkomponenten führt zu einer Verschiebung des Farbwertes parallel zur Unbuntheitsgerade des RGB-Farbraumes. Somit kann ein Rauscheintrag durch den Wert GS beim Ergebniswert 134 zu keinem nachteiligen Buntrauschen führen, sondern lediglich zu einem unbunten Rauschen.

Fig. 15 zeigt eine beispielhafte Faltungsmatrix 140. Das Errechnen von Werten aus einer Umgebung kann durch Anwendung der in Fig. 15 dargestellten Faltungsmatrix 140 auf die Umgebung eines betrachteten Pixels erfolgen. Eine solche Faltung erfordert einen geringen Rechenaufwand, wenn viele Elemente der Faltungsmatrix 140 gleich Null sind, weil auf die diesen Elementen der Faltungsmatrix zugeordneten mathematischen Operationen verzichtet werden kann. Die Elemente a00, a01, a02, a03, a04, a10, a14, a20, a24, a30, a34, a40, a41, a42, a43 und a44 werden dabei als Randelemente 141 bezeichnet und die Elemente a11, a12, a13, a21, a22, a23, a31, a32 und a33 als innere Elemente 142.

Es ist vorteilhaft, wenn die drei zur Bestimmung der Werte R1, G1 und B1 eingesetzten Faltungsmatrizen so aufgebaut sind, dass die Farben Rot, Grün und Blau möglichst korrekt wiedergegeben werden. Dazu ist es erforderlich, dass zur Errechnung von R1 die Summe aller Elemente der Faltungsmatrix, die mit Werten roter Pixel verrechnet werden, den Wert "1" ergibt und die Summe aller Elemente, die mit Werten grüner Pixel verrechnet werden, den Wert "0" sowie die Summe aller Elemente, die mit Werten blauer Pixeln verrechnet werden, ebenfalls den Wert "0". In gleicher Weise ist es erforderlich, dass zur Errechnung von G1 die Summe aller Elemente der Faltungsmatrix, die mit Werten grüner Pixel verrechnet werden, den Wert "1" ergibt und die Summe aller Elemente die mit Werten roter Pixel verrechnet werden, den Wert "0" ergibt, sowie die Summe aller Elemente, die mit Werten blauer Pixel verrechnet werden, ebenfalls den Wert "0". Und in gleicher Weise ist es erforderlich, dass zur Errechnung von B1 die Summe aller Elemente der Faltungsmatrix, die mit Werten blauer Pixel verrechnet werden, den Wert "1" ergibt und die Summe aller Elemente die mit Werten roter Pixel verrechnet werden, den Wert "0" ergibt, sowie die Summe aller Elemente, die mit Werten grüner Pixel verrechnet werden, ebenfalls den Wert "0" ergibt. Aus gleichem Grunde ist es auch erforderlich, dass zur Berechnung von GS die Summen der Elemente der Faltungsmatrix, die jeweils den Pixeln einer der drei Farben Rot, Grün oder Blau zugeordnet sind, jeweils den Wert "0" ergeben.

Da sich je nach Phasenlage cR, cGr, cGb oder cB die Pixel der Farben Rot, Grün und Blau an anderen Stellen befinden, ist es zweckmäßig, für jede der vier Phasenlagen und für jede der drei Farben eine eigene Faltungsmatrix zu verwenden, so dass sich für drei Farben und vier Phasenlagen eine Gesamtzahl von 12 Faltungsmatrizen ergibt. Die Werte R1, G1 und B1 werden dann je nach Phasenlage aus durch Anwendung der Faltungsmatrizen auf die Umgebung erhaltenen Werten ausgewählt. Alternativ ist es natürlich auch möglich, nur solche Faltungen durchzuführen, deren Ergebniswerte auch tatsächlich benötigt werden. Letzteres wäre beispielsweise bei der Benutzung eines DSP vorteilhaft, weil dadurch der Berechnungsaufwand sinkt.

Zur Verringerung des Berechnungsaufwands ist es ferner vorteilhaft, die Phasensymmetrien des Bayer-Musters auszunutzen. So befinden sich beispielsweise bei cR die roten Pixel an der Stelle, an der sich bei cB die blauen Pixel befinden, so dass zur Berechnung von R1 bei cR die gleiche Faltungsmatrix verwendet werden kann, wie zur Berechnung von B1 bei cB. Es lassen sich somit die in der nachfolgenden Tabelle aufgeführten symmetrische Zuordnungen nutzen, die jeweils eine gemeinsame Nutzung von Berechnungsergebnissen ermöglichen und somit den Berechnungsaufwand für R1, G1 und B1 um die Hälfte reduzieren, also von 12 auf 6 Faltungsvorgänge.

| Erste Phasenlage | Erstes Berechnungsergebnis | Zweite Phasenlage | Zweites Berechnungsergebn is |
|---|---|---|---|
| cR | R1 | cB | B1 |
| cR | G1 | cB | G1 |
| cR | B1 | cB | R1 |
| cGr | R1 | cGb | B1 |
| cGr | G1 | cGb | G1 |
| cGr | B1 | cGb | R1 |

Um die weiter oben genannten vorteilhaften Symmetriebedingungen einzuhalten, ist es vorteilhaft, wenn die Faltungsmatrix jeweils horizontal und vertikal spiegelsymmetrisch sowie 90° drehsymmetrisch gewählt wird, sofern die Lage der Farben in der Bayer-Matrix dies zulässt. Es wird gemäß EMVA 1288 angenommen, dass das Rauschen der Signale der verschiedenen Pixel des Bildsensors untereinander unkorreliert ist, es sich also um statistisch unabhängige Zufallsereignisse handelt. Somit kann die Wirkung einer Faltung mit der Umgebung aus Signalen von Pixeln mit Hilfe einer Fehlerfortpflanzungsberechnung vorhergesagt werden. Die Rauschfortpflanzung einer Faltungsmatrix ist genau dann besonders gering, wenn die Elemente der Faltungsmatrix jeweils möglichst klein und positiv sind. Dies ist vorteilhaft, weil mit Hilfe einer solchen Faltungsmatrix Werte mit geringem Rauschen erzeugt werden.

In einem FPGA werden Werte durch Bitvektoren repräsentiert, also durch Zahlen im Binärsystem. Multiplikationen mit konstanten Vielfachen von 2 oder 1/2 lassen sich dort mit geringem Aufwand durchführen, da auf die entsprechenden, diese Zahlen beinhaltenden Register nur in anderer Weise, nämlich verschoben, zugegriffen werden muss. Werden die Elemente der Faltungsmatrizen konstant als Vielfache von 2 oder 1/2 gewählt, so kann die jeweils zugeordnete Multiplikation ohne Einsatz von Hardware-Ressourcen, z.B. festverdrahteten Multiplikatoren, vorgenommen werden, wodurch Hardware-Ressourcen eingespart werden können.

Bei der Verwendung von Faltungsmatrizen, in denen die Werte von Randelementen einer Farbe größer oder gleich den inneren Werten derselben Farbe sind, werden nachteilige Bildartefakte beobachtet. Sind beispielsweise nur Elemente mit gleichen, positiven Werten sowie andere Elemente mit dem Wert "0" vorhanden, so kann es zu Bildartefakten kommen, die das Bild auf nachteilige Weise wie ein Mosaik aussehen lassen. Solche Artefakte lassen sich vermeiden, indem die Werte der Randelemente vom Betrag her kleiner gewählt werden als die Werte der inneren Elemente.

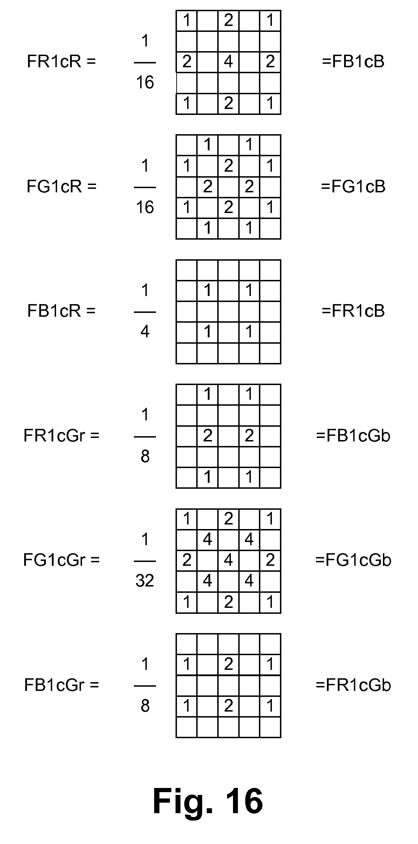

Fig. 16 zeigt beispielhafte Faltungsmatrizen zur Bestimmung der Werte R1, G1 und B1 in den Phasenlagen cR, cGr, cGb und cB, die die zuvor genannten vorteilhaften Bedingungen erfüllen. Der Bruch vor der eigentlichen Faltungsmatrix bedeutet jeweils, dass alle Werte der Faltungsmatrix mit diesem Wert zu multiplizieren sind. Weiterhin wird die Konvention eingeführt, dass alle leeren Felder den Wert "0" beinhalten. Dadurch ergibt sich im Folgenden eine einfachere Notation und eine bessere Lesbarkeit.

Für die Phasenlage cR ist FR1cR die Faltungsmatrix zum Ermitteln von R1, FG1cR die Faltungsmatrix zum Ermitteln von G1 und FB1cR die Faltungsmatrix zum Ermitteln von B1. Für die Phasenlage cGr ist FR1cGr die Faltungsmatrix zum Ermitteln von R1, FG1cGr die Faltungsmatrix zum Ermitteln von G1 und FB1cGr die Faltungsmatrix zum Ermitteln von B1. Für die Phasenlage cGb ist FR1cGb die Faltungsmatrix zum Ermitteln von R1, FG1cGb die Faltungsmatrix zum Ermitteln von G1 und FB1cGb die Faltungsmatrix zum Ermitteln von B1. Für die Phasenlage cB ist FR1cB die Faltungsmatrix zum Ermitteln von R1, FG1cB die Faltungsmatrix zum Ermitteln von G1 und FB1cB die Faltungsmatrix zum Ermitteln von B1.

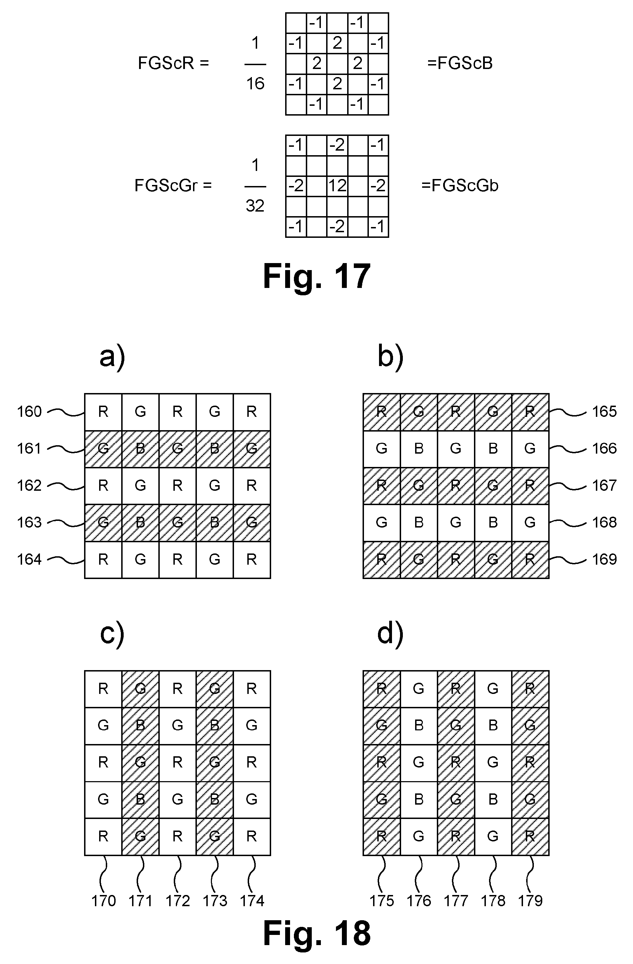

Fig. 17 zeigt beispielhafte Faltungsmatrizen zur Bestimmung der grünen Strukturinformation GS in den Phasenlagen cR, cGr, cGb und cB. Im Falle der Phasenlagen cR bzw. cB wird GS durch Anwendung der Faltungsmatrizen FGScR bzw. FGScB ermittelt und im Falle der Phasenlagen cGr und cGb durch Anwendung der Faltungsmatrizen FGScGr und FGScGb. Auch in dieser Ausführung sind die vorgenannten vorteilhaften Merkmale erfüllt, mit Ausnahme des Merkmals, dass alle Elemente der Faltungsmatrix positiv sind. Auf die Erfüllung dieses Merkmals wurde hier bewusst verzichtet, um die Forderung zur Ermittlung eines Wertes für die grüne Strukturinformation GS einhalten zu können. Nämlich dass die Summe aller Elemente Null sein soll.

Solche Faltungsmatrizen gemäß Fig. 17 liefern als grüne Strukturinformation GS die Abweichungen der Struktur vom Grünwert G1 in einer solchen Form, dass die Addition der Strukturinformation auf vorteilhafte Weise strukturreichere Werte liefert.

Die Figuren 18a-18d zeigen schematische Darstellungen zur Erläuterung des Zustandekommens von Fehlfarben bei kleinen Strukturen. Werden kleine Strukturen mit einem Bildsensor mit Bayer-Muster aufgenommen und dabei Farbwerte mit einem Debayring errechnet, so entstehen häufig nachteilige Fehlfarben. Deren Ursache kann anhand der Figuren 18a-18d erläutert werden. Es sei angenommen, dass gemäß Fig. 18a ein horizontales schwarz-weißes Streifenmuster mit dem Bildsensor aufgenommen wird, welches aus horizontal verlaufenden hellen Streifen 160, 162 und 164 und aus dazu parallel verlaufenden dunklen Streifen 161 und 163 besteht, wobei für die hellen bzw. dunkeln Streifen 160-164 gilt, dass dort jeweils die Signale für Rot, Grün und Blau untereinander gleich sind. Es ist ersichtlich, dass alle roten Pixel hell und alle blauen Pixel dunkel sind. Dieses Streifenmuster wird nun als Datenstrom übermittelt und in einer Bildverarbeitungsrecheneinheit wird daraus eine Umgebung aufgebaut, anhand derer Farbwerte R1, G1 und B1 unter Anwendung der in Fig. 16 gezeigten Faltungsmatrizen FR1cR, FG1cR und FB1cR errechnet werden. Es ist ersichtlich, dass die Faltungsmatrix FR1 cR die Faltungssumme nur aus hellen roten Signalen aus Zeilen mit den hellen Streifen 160, 162 und 164 errechnet und andererseits die Faltungsmatrix FB1cR die Faltungssumme nur aus dunklen blauen Signalen aus Zeilen mit den dunklen Streifen 161 und 163 errechnet. Wird in gleicher Weise die Wirkung der Faltungsmatrix FG1cR berücksichtigt, so ergibt sich daraus ein oranger Farbwert mit Farbkomponenten R1, G1 und B1 und ebenfalls ein oranger Farbwert mit Farbkomponenten Rout, Gout und Bout. Diese orangen Farbwerte stellen unerwünschte Fehlfarben dar, da das ursprünglich aufgenommene Bild aus Streifen völlig unbunt ist.

Ähnlich stellt sich die Situation in Fig. 18b dar. Auch hier wird ein horizontales, schwarz-weißes Streifenbild aus dunklen Streifen 165, 167 und 169 sowie aus hellen Streifen 166, und 168 angenommen. Hierbei sind die blauen Pixel hell und die roten Pixel dunkel und unter Anwendung der Faltungsmatrizen FR1cR, FG1cR und FB1cR ergibt sich nun ein himmelblauer Farbwert, der wiederum eine nachteilige Fehlfarbe darstellt.

In Fig. 18c ist die gleiche Situation gezeigt, jedoch diesmal mit einem vertikalen schwarz-weißen Streifenbild aus hellen Streifen 170, 172 und 174 und dunkeln Streifen 171 und 173. Ebenso wie im Falle der Fig. 18a ergibt sich eine unerwünschte orange Fehlfarbe für den Ergebnisfarbwert.

Schließlich ist in Fig. 18d die gleiche Situation wie in Fig. 18c gezeigt, jedoch verlaufen hier die hellen Streifen 176 und 178 nicht über die roten, sondern über die blauen Pixel und die dunklen Streifen 175, 177 und 179 verlaufen nicht über die blauen, sondern über die roten Pixel. Dementsprechend ergibt sich hier wieder eine unerwünschte himmelblaue Fehlfarbe.

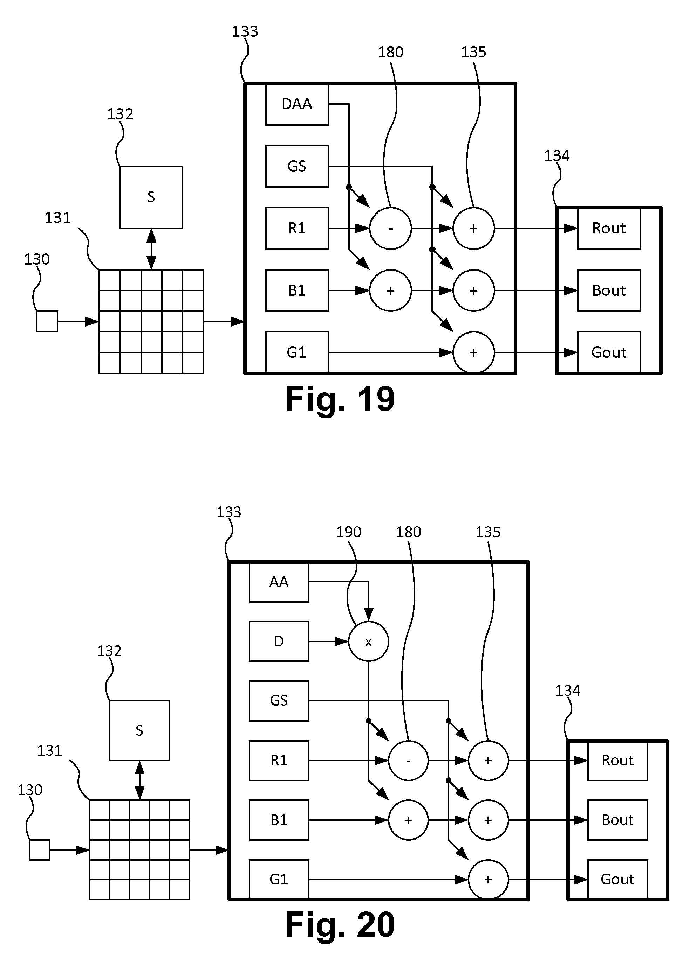

Fig. 19 zeigt ein schematisches Ablaufdiagramm einer Rekonstruktion von Farbkomponenten mit zusätzlicher Korrektur von Fehlfarben gemäß einem zweiten Ausführungsbeispiel, bei dem der mathematische Bildverarbeitungsprozess 133 dergestalt weitergebildet ist, dass aus der Umgebung 131 ein zusätzlicher Korrekturwert DAA zur Beseitigung der Fehlfarben errechnet wird, der mit einem von der Phasenlage abhängigen Vorzeichen zu den Komponentenwerten R1 und B1 mittels eines Addierers/Subtrahierers 180 addiert bzw. subtrahiert wird, d.h. zum einen Werte addiert und vom anderen Wert subtrahiert wird. Ein Beispiel für eine Berechnung des zusätzlichen Korrekturwerts DAA wird in Fig. 20 gezeigt.

Diesem Vorgehen liegt die Erkenntnis zugrunde, dass sich die Streifen in einem abwechselnd hellen und dunklen Muster auf den grünen Pixeln wiederfinden. Da die geometrische Situation für verschiedene Farben und für verschiedene Richtungen der Streifen farbliche und räumliche Symmetrien aufweist, kann abgeleitet werden, dass genau derselbe Korrekturwert DAA, der für eine der Farbkomponenten R1 und B1 als Korrekturwert addiert wird, von der anderen der jeweiligen Farbkomponente subtrahiert werden muss.

Fig. 20 zeigt ein schematisches Ablaufdiagramm einer Rekonstruktion von Farbkomponenten mit Berücksichtigung der Richtung kleiner Strukturen für die Farbkorrektur gemäß einem dritten Ausführungsbeispiel.

Aus einem Vergleich der Beispielfälle in Fig. 18a und Fig. 18c und andererseits der Beispielfälle in Fig. 18b und Fig. 18d ergibt sich, dass im jeweils ersten Fall genau diejenigen Grünpixel hell sind, die im jeweils zweiten Fall dunkel sind. Somit ist es möglich, jeweils einen Wert AA durch Faltung der Signale der Grünwerte aus der Umgebung 131 zu ermitteln und diesen mit einem positiven oder negativen Richtungsschätzwert D mittels eines Multiplizierers 190 zu multiplizieren, wobei das Vorzeichen des Richtungsschätzwerts D von einer horizontalen oder vertikalen Vorzugsrichtung im Bild abhängig ist, um den Korrekturwert DAA auf geeignete Weise zu bestimmen. Das dritten Ausführungsbeispiel lässt sich somit auf einfache Weise mit wenig Hardware-Aufwand oder mit geringer Rechenzeit realisieren, um dadurch Fehlfarben reduzieren oder beseitigen zu können.

Alternativ ist es auch möglich, den Richtungsschätzwert D auf eine andere Weise zu verwenden, z.B. aus ihm ein Gewicht einer gewichteten Mittelung zu errechnen und diese gewichtete Mittelung zwischen zwei den verschiedenen Richtungen zugeordneten Werten durchzuführen.

Auch ist es alternativ möglich, auf Grundlage der Richtungsschätzung eine Auswahl zwischen Werten verschiedener Richtungen zu treffen. Dadurch kann der Bedarf an Logik-Ressourcen im FPGA verringert werden.

Weiterhin ist es vorteilhaft, die Faltungsmatrix zur Bestimmung des Werts AA jeweils so auszugestalten, dass sich die Vorzeichen in der Faltungsmatrix zeilenund spaltenweise abwechseln, da dann ein wirksamer Korrekturterm für zeilenoder spaltenweise abwechselnde Beleuchtungsintensität erzielt wird. Auch ist es vorteilhaft, wenn die Summe der Elemente der Faltungsmatrix zur Bestimmung von AA den Wert "0" ergibt. Dadurch lassen sich auch Fehlfarben in strukturlosen Flächen vermeiden.

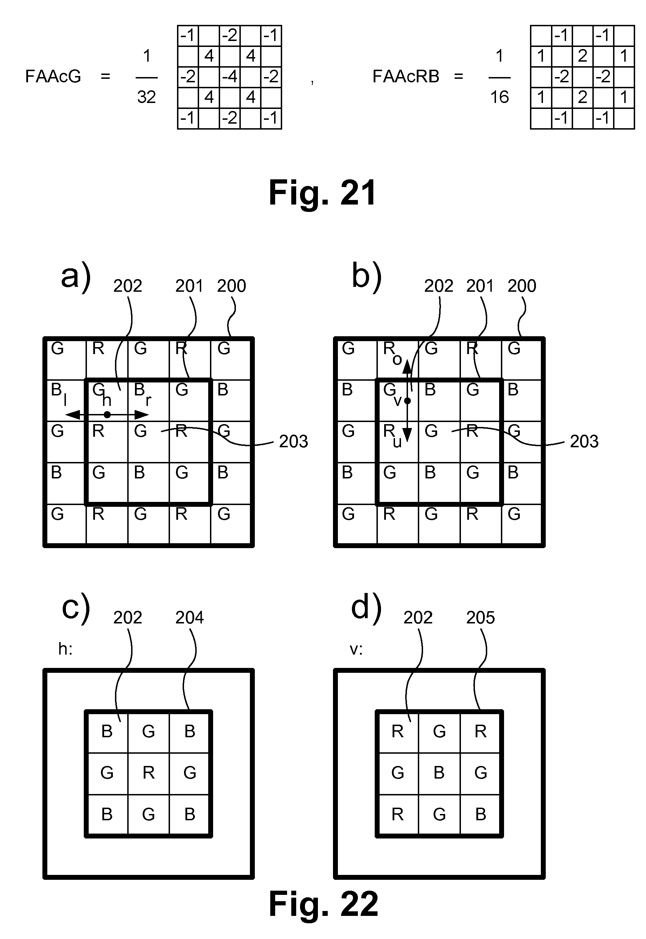

Fig. 21 zeigt beispielhafte Faltungsmatrizen zur Bestimmung des Wertes AA. Hierbei wird die Faltungsmatrix FAAcG für die Phasenlagen cGr und cGb verwendet und die Faltungsmatrix FAAcRB für die Phasenlagen cR und cB. Diese Faltungsmatrizen erfüllen die vorgenannten Bedingungen und bieten überdies den Vorteil, dass alle Elemente dem Betrage nach Zweierpotenzen enthalten, so dass bei der Bildverarbeitung (z.B. im FPGA) eine vereinfachte und ressourcensparende Multiplikation durch bloße Verschiebung von Binärzahlen realisiert werden kann.

Wie bereits erwähnt, kann der Richtungsschätzwert D so ermittelt werden, dass er im Falle einer horizontal verlaufenden Struktur ein anderes Vorzeichen aufweist als im Falle einer vertikal verlaufenden Struktur, und dass er im Falle einer Struktur ohne Vorzugsrichtung, beispielsweise einer glatten Fläche, einen Wert nahe bei Null aufweist. Weiterhin ist es vorteilhaft, wenn die Berechnungsvorschriften, z.B. die Faltungsmatrizen, für die Phasenlagen horizontal benachbarter Pixel in den Zeilensummen übereinstimmen und die für die Phasenlagen vertikal benachbarte Pixel in den Spaltensummen übereinstimmen. Dadurch kann ein fortlaufender Wechsel der Richtungsschätzungen vermieden werden, der ansonsten zu unerwünschten Labyrinthartefakten führen könnte.

Die Wirkung eines sogenannten Labyrinthartefakts kann bspw. anhand eines vorbestimmten Testbilds geprüft werden. Dazu kann bspw. das Bild kodim19.png (herunterladbar von http://optipng.sourceforge.net/pngtech/corpus/kodak/kodim19.html) verwendet werden. Dieses Bild wird in Fachkreisen häufig zum Testen von mathematischen Bildverabeitungsprozessen verwendet. Dabei wird aus dem ursprünglichen Farbbild durch pixelweise Auswahl einer durch das Bayer-Muster vorgegebenen Farbkomponente ein künstliches Sensorbildsignal mit einem Bayer-Muster erzeugt und darauf ein Debayring angewendet.

Dabei kann der Richtungsschätzwert D aus einem Vergleich zweier Werte DH und DV zu ermitteln werden, von denen einer (DH) Helligkeitsänderungen in horizontaler Richtung und der andere (DV) Helligkeitsänderungen in vertikaler Richtung repräsentiert, wobei das Vorzeichen dem Richtungsschätzwert D in Abhängigkeit davon, welcher der beiden Werte größer ist, ein positives oder negatives Vorzeichen zugewiesen wird. Sind beide Werte gleich groß, so wird der Richtungsschätzwert auf "0" gesetzt. Dadurch kann der Richtungsschätzwert D auf einfache Weise ermittelt werden.

Es ist auch möglich, den Richtungsschätzwert D aus einer Differenzbildung der beiden Werte DH und DV zu ermitteln. Falls die gebildete Differenz einen vorbestimmten oberen Grenzwert überschreitet oder einen vorbestimmten unteren Grenzwert unterschreitet, so kann der Richtungsschätzwert D auf den oberen Grenzwert oder auf den unteren Grenzwert gesetzt wird, so dass eine Deckelung vorgenommen wird. Es kann vorgesehen werden, dass der obere Grenzwert auf den Wert "1" und der untere Grenzwert auf den Wert "-1" festgelegt sind und dadurch der Wertebereich des Richtungsschätzwerts D auf den Bereich von -1 bis 1 beschränkt wird. Dies hat den Vorteil, dass im Falle einer klar bestimmbaren Richtung der Struktur mit hohem Differenzbetrag der Richtungsschätzwert D die Werte "1" oder "-1" annimmt und dadurch der Wert DAA einfach gebildet werden kann. Weiterhin hat dies den Vorteil, dass der Richtungsschätzwert D im Falle einer nicht klar bestimmbaren Richtung der Struktur einen Wert einnimmt, der betragsmäßig kleiner als 1 ist, wodurch sich ein betragsmäßig kleinerer Wert für DAA ergibt und dadurch übermäßige Korrekturen auf glatten Flächen im Bild vermieden werden können.

Die Figuren 22a-22d zeigen beispielhafte Darstellungen zur Erläuterung der Ermittlung der horizontalen (Fig. 22a) und vertikalen (Fig. 22b) Helligkeitsänderung und sich daraus ergebende innere Bereiche für Werte der horizontalen (Fig. 22c) und vertikalen (Fig. 22d) Helligkeitsänderung.

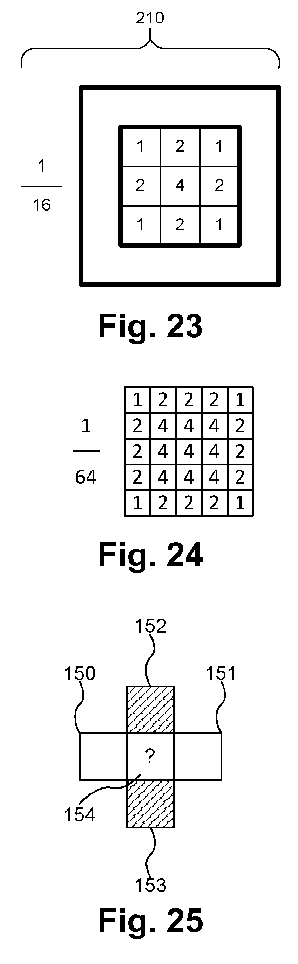

Die Helligkeitsänderung in horizontaler bzw. vertikaler Weise kann dadurch ermittelt werden, dass für einen inneren Bereich 201 der Umgebung 131 für jeden Pixel ein Wert als Betrag der Differenz der beiden in horizontaler bzw. vertikaler Richtung benachbarten Pixel bestimmt wird. So kann, wie in Fig. 23a gezeigt, für einen Pixel 202 ein Wert h für die Helligkeitsänderung in horizontaler Richtung als Betrag der Differenz der Werte der horizontal benachbarten Pixel l und r ermittelt werden. Ebenso kann, wie in Fig. 23b gezeigt, für einen Pixel 202 ein Wert v für die Helligkeitsänderung in vertikaler Richtung als Betrag der Differenz der Werte der vertikal benachbarten Pixel o und u ermittelt werden. Je nach der Phasenlage und je nach Farbe des zentralen Pixels 203 repräsentieren die dem Pixel 202 zugeordneten Werte h und v eine bestimmte Farbe. Liegt beispielsweise die Phasenlage cGr vor (wie in Fig. 23a und 23b), so sind der zentrale Pixel 203 grün, die Pixel mit den Werten l und r jeweils blau, und die Pixel mit den Werten o und u jeweils rot. Somit repräsentiert der Wert h für den Pixel 202 einen Differenzbetrag blauer Pixel und der Wert v einen Differenzbetrag roter Pixel.

Fig. 22c zeigt die farbliche Zugehörigkeit der Werte für die horizontale Helligkeitsänderung h. Wie zuvor dargelegt, hat der Wert h für den Pixel 202 die Farbe Blau B. Fig. 22d zeigt die farbliche Zugehörigkeit der Werte für die vertikale Helligkeitsänderung v. Wie zuvor dargelegt, hat der Wert v für den Pixel 202 die Farbe Rot (R).

Fig. 23 zeigt eine beispielhafte Faltungsmatrix 210 für die Richtungsschätzung. Zur Vermeidung einer Farbabhängigkeit des Ergebnisses ist es vorteilhaft, wenn bei der Ermittlung der Werte DH und DV aus den Werten h und v Differenzen der verschiedenen Farben zu jeweils den Anteilen eingehen, die ihrer Häufigkeit im Bayer-Muster entsprechen. Dies kann auf einfache Weise unter Verwendung einfacher Multiplikationen mit Zweierpotenzen durch eine Faltung der Werte h bzw. v des inneren Bereichs mit der Faltungsmatrix 210 vorgenommen werden.

Wird beispielsweise die Faltungsmatrix 210 auf die Bereiche 204 und 205 der Fig. 22a-22d angewandt, so gehen die Differenzbeträge der Farben Rot und Blau mit dem Faktor 1/4 sowie die der Farbe Grün mit dem Faktor 1/2 in die Berechnung ein.

Weiterhin weist die Faltungsmatrix 210 eine Eigenschaft auf, durch die ein unerwünschter Wechsel der Richtungsschätzungen und damit verbundene Labyrinthartefakte vermeiden werden können. Die Ursache solcher häufig zu beobachtenden alternierend unterschiedlichen Richtungsschätzungen liegt darin, dass verschiedene Farben für horizontal benachbarte Phasenlagen in der Faltung zeilenweise bzw. für vertikal benachbarte Phasenlagen in der Faltung spaltenweise mit verschiedenen Faktoren eingehen. Zur Vermeidung von Labyrinthartefakten sollte für horizontal benachbarte Phasenlagen (bspw. cR und cGr oder cGb und cB) gelten, dass für jede Zeile und für jede Farbe die Zeilensumme der dieser Farbe zugehörenden Faltungsmatrixelemente gleich ist. Ferner sollte für vertikal benachbarte Phasenlagen (bspw. cR und cGb oder cGr und cB) gelten, dass für jede Spalte und für jede Farbe die Spaltensumme der dieser Farbe zugehörenden Faltungsmatrixelemente gleich ist.

Bei der Faltungsmatrix 210 in Fig. 23 ist die Zeilensumme der Summe der Faktoren für die verschiedenen Farben horizontal benachbarter Phasenlagen jeweils gleich und daher werden Labyrinthartefakte vermieden.

Weiterhin ist es vorteilhaft, wenn sich die in den Figuren 16, 17 und 21 gezeigten Faltungsmatrizen aus einem gemeinsamen Grundfilter ableiten lassen. Dann sind alle Filter räumlich aufeinander abgestimmt und störende Farbsäume können auf vorteilhafte Weise vermieden werden. Weiterhin können für jede Farbe und für jede Phase Faltungsmatrizen zur horizontalen (IHF) bzw. vertikalen (IVF) Interpolation verwendet werden. Bspw. kann der Wert Rot an der Stelle des Rotpixels über eine Faltung mit einer Matrix ermittelt werden, welche nur im Zentrum den Wert "1" und ansonsten nur die Werte "0 aufweist. Ferner kann bspw. der Wert Rot an der Stelle eines grünen Pixels, der einem roten Pixel horizontal benachbart ist, als Mittelwert der ihn umgebenden roten Pixel berechnet werden. Dann würde die Faltungsmatrix IHF jeweils den Wert "1/2", links und rechts des mittleren Pixels enthalten und ansonsten nur die Werte "0". Ebenso lassen sich auch komplexere Interpolations-Faltungsmatrizen IHF und IVF angeben, die beispielsweise Krümmungen im Wertebereich einer anderen Farbe mit berücksichtigen.

Schließlich kann eine modifizierte Faltungsoperation angenommen werden, bei der die Größe der Berechnungsumgebung in der Faltung erhalten bleibt und bei Randproblemen durch geeignete Annahmen, z.B. durch eine zur Berechnung angenommene periodische Erweiterung unter Beibehaltung des Bayer-Musters, ein farblich korrektes Ergebnis erzielt wird. Verrechnet man für die verschiedenen Farben die Interpolations-Faltungsmatrizen zur Interpolation auf geeignete Weise mit Positionsmatrizen für die verschiedenen Farben in den verschiedenen Phasen und separiert die Ergebnisse in der in Fig. 20 gezeigten Weise, unter Vernachlässigung sehr kleiner Beiträge oder Differenzen, so ergeben sich die oben genannten Matrizen.

Fig. 24 zeigt ein Beispiel für einen gemeinsamen Grundfilter. Der gezeigte Grundfilter weist einerseits stark rauschminimierende Eigenschaften auf und führt andererseits zu Faltungsmatrizen, die in der Bildverarbeitungs-Recheneinheit (e.g. FPGA) mit geringem Aufwand realisierbar sind. So können bspw. alle in den vorliegenden Ausführungsbeispielen genannten Berechnungsvorschriften für R1, G1, B1, GS und AA anhand dieses Grundfilters errechnet werden.

Fig. 25 zeigt eine schematische Darstellung zur Erläuterung eines Schätzproblems. Sofern eine Richtungsschätzung vorliegt, stellt sich im Rahmen der oben genannten Interpolation der Farbe Grün beispielsweise das in dem Figuren 18a-18d erläuterte Schätzproblem. Hier soll ein Grünwert für den zentralen Pixel 154 geschätzt werden. Es wird

angenommen, dass die horizontal benachbarten Grünpixel 150 und 151 hell sind und die beiden vertikal benachbarten Grünpixel 152 und 153 dunkel sind. Die Frage, ob der Grünwert für den zentralen Pixel 154 als hell oder dunkel anzunehmen sei, lässt sich nur auf Grundlage einer weiteren Information entscheiden. Erfindungsgemäß kann diese Information aus dem Richtungsschätzwert D abgeleitet werden, wie im Folgenden anhand eines vierten Ausführungsbeispiels erläutert wird.

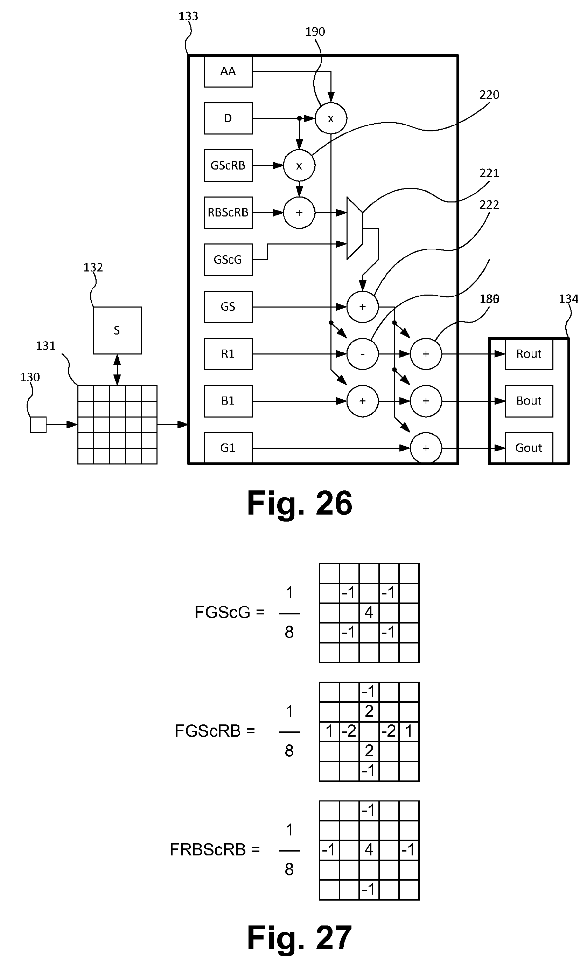

Fig. 26 zeigt ein schematisches Ablaufdiagramm einer Rekonstruktion von Farbkomponenten unter Berücksichtigung der Richtung kleiner Strukturen gemäß dem vierten Ausführungsbeispiel.

Zusätzlich zur Strukturinformation GS wird im vorliegenden vierten Ausführungsbeispiel noch eine zweite detailliertere Strukturinformation erzeugt, die hier GS2 genannt wird. Zu deren Berechnung ist eine Fallunterscheidung mittels einer Auswahleinheit 221 zwischen einerseits den als Phasenlage cG zusammengefassten Phasenlagen cGr und cGb und andererseits den als Phasenlage cRB zusammengefassten Phasenlagen cR und cB erforderlich. Im Falle der Phasenlage cG wird als zweite Strukturinformation GScG ausgewählt. Andererseits wird im Falle der Phasenlage cRB als zweite Strukturinformation die Summe aus RBScRB und dem mittels des Multiplizierers 220 gewonnen Produkt aus GScRB und dem Richtungsschätzwert D gewählt.

Dem liegt folgender Gedanke zugrunde: In der Phasenlage cG ist der Pixel im Zentrum der Umgebung 131 bereits ein Grünpixel, dessen Signal vorliegt und der zum Erzeugen der zweiten Strukturinformation GScG direkt herangezogen werden kann. In der Phasenlage cRB ergibt sich hingegen das in Fig. 26 gezeigte Schätzproblem im Grünkanal. Dieses kann erfindungsgemäß dadurch gelöst werden, dass die Strukturinformation des Grünkanals mittels einer Faltungsmatrix als GScRB dergestalt ermittelt wird, dass die Richtungsabhängigkeit im Vorzeichen codiert ist. Wird GScRB nun mittels eines weiteren Multiplizierers 220 mit dem Richtungsschätzwert D multipliziert, in welchem ebenfalls die Richtungsinformation als Vorzeichen kodiert ist, so ergibt sich eine Strukturinformation, die das oben genannte Schätzproblem auf korrekte Weise löst. Die zweite Strukturinformation lässt sich in der Phasenlage cRB in ihrem Detaillierungsgrad noch weiter dadurch verbessern, dass ein Wert RBScRB mittels eines Addierers 223 addiert wird, welcher seinerseits die detaillierte Strukturinformation der Rot- oder Blaupixel enthält, je nachdem ob die Phasenlage cRB der Phasenlage cR oder cB entspricht.

Das Hinzufügen der zweiten Strukturinformation hat den Vorteil, dass die Bildschärfe dadurch verbessert wird und damit auch eine einfachere Bildverarbeitung ermöglich ist, z.B. Erkennung von Schrift. Es ist vorteilhaft, wenn die entsprechenden Faltungsmatrizen FGScG, FGScRB und FRBScRB für GScG, GScRB und RBScRB jeweils in Summe den Wert "0" aufweisen, weil dann nachteilige Helligkeitsverfälschungen vermieden werden können. Weiterhin ist es vorteilhaft, wenn die Faltungsmatrizen FGScG und FRBScRB jeweils 90° drehsymmetrisch und damit auch spiegelsymmetrisch sind, weil dann im Ergebnisbild erkennbare nachteilige Vorzugsrichtungen vermieden werden. Weiterhin ist es vorteilhaft, wenn die Faltungsmatrix FGScRB horizontal und vertikal spiegelsymmetrisch ist und bei 90°-Drehung das Vorzeichen wechselt. Dadurch wird die gewünschte Funktionalität im Zusammenhang mit der Multiplikation mit dem Richtungsschätzwert D erreicht.

Fig. 27 zeigt beispielhafte Faltungsmatrizen FGScG, FGScRB und FRBScRB für die Berechnung der Werte für GScG, GScRB und RBScRB, wobei alle oben aufgeführten vorteilhaften Eigenschaften erfüllt werden. Weiterhin können die Faltungsmatrizen - wie oben beschrieben - durch Verwendung eines zweiten Grundfilters GF2 errechnet werden. Beide Faltungsmatrizen sind auf vorteilhafte Weise gering und nur mit Zweierpotenzen oder negativen Zweierpotenzen besetzt, wodurch der Berechnungsaufwand in der Bildverarbeitungs-Recheneinheit (z.B. FPGA) gering gehalten werden kann.

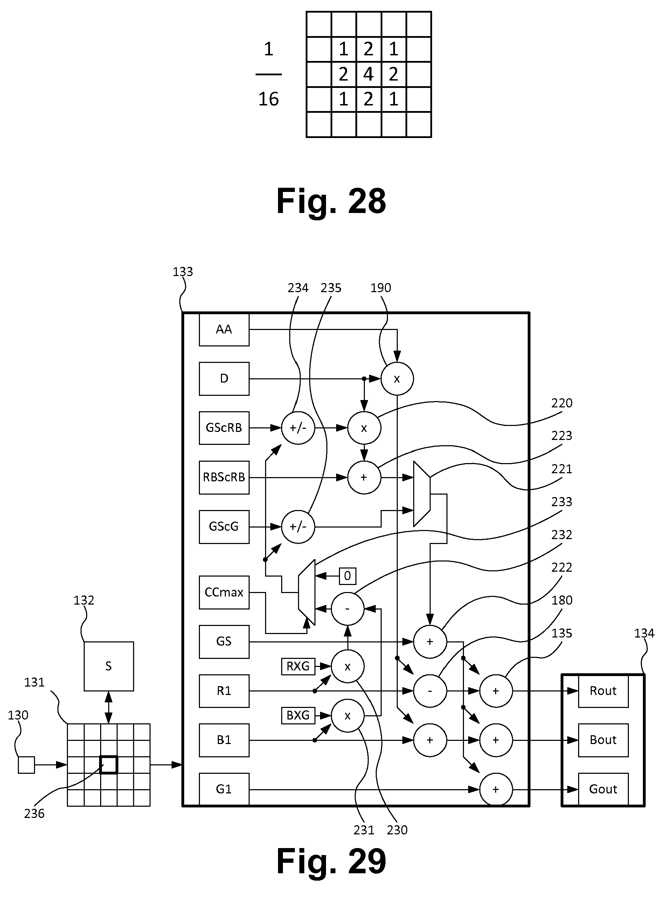

Fig. 28 zeigt ein Beispiel für das zweite Grundfilter GF2. Dieser Filter weist auf vorteilhafte Weise höhere Raumfrequenzen und gleiche Symmetrieeigenschaften wie der Grundfilter GF auf.

Fig. 29 zeigt ein schematisches Ablaufdiagramm einer Rekonstruktion von Farbkomponenten unter Berücksichtigung der Richtung kleiner Strukturen gemäß einem fünften Ausführungsbeispiel.

Im vorstehend beschriebenen vierten Ausführungsbeispiel können unerwünschte karierte Bildartefakte auftreten. Diese können einer Green-Green-Imbalance zugeordnet werden. Unter Verwendung verschiedenen Bildsensoren, verschiedenen Beleuchtungen und verschiedenen Objektfarben lässt sich nachweisen, dass sich die Green-Green-Imbalance an einer Stelle des Bildes jeweils proportional zum dort vorhanden Rotsignal und proportional zum dort vorhandenen Blausignal verhält. Somit kann die Green-Green-Imbalance durch Zuhilfenahme der Farbkomponenten R1 und B1 linear korrigiert werden. Durch Messungen mit verschiedenen Farben lassen sich für zahlreiche Bildsensoren Werte RXG bzw. BXG bestimmen, die angeben, wie stark sich der Wert für die Green-Green-Imbalance dG porportional zum Farbwert für Rot bzw. Blau verändert. Der Wert dG ist dabei definiert als Differenz Gr minus Gb.

Weiterhin ist zu berücksichtigen, dass die Werte R1, G1, B1, GS, RBSeRB und der Richtungsschätzwert D nicht durch die Green-Green-Imbalance beeinflusst werden. Dagegen werden die Werte GScG und GScRB durch die Green-Green-Imbalance stark beeinflusst. Theoretisch wird auch der Wert AA durch eine solchen Green-Green-Imbalance beeinflusst, wobei dies hat jedoch praktisch keine erkennbare Auswirkungen zeigt und daher auf eine Korrektur des Werts AA hinsichtlich der Green-Green-Imbalance verzichtet werden kann.

Die Korrektur der Werte GScG und GScRB bezüglich der Green-Green-Imbalance erfordert im fünften Ausführungsbeispiel folgende Modifikationen. Die Farbwerte R1 bzw. B1 werden mit den Werten RXG bzw. BXG in entsprechenden Multiplizierern 230, 231 multipliziert. Aus den dabei erhaltenen Ergebnissen wird mittels eines Subtrahierers 232 die Differenz gebildet und die erhaltene Differenz wird je nach Phasenlage in einem entsprechenden Verknüpfungsglied 234, 235 entweder zu den Werte GScG und GScRB addiert oder von diesen subtrahiert. Die Green-Green-Imbalance wird hauptsächlich durch die den Grünpixel benachbarten Rot- und Blaupixel verursacht. Für die Berechnung der Werte von R1, G1 und B1 können jedoch auch weiter entfernte Rot- oder Blaupixel herangezogen werden, so dass unerwünschte Reißverschlussartefakte an Bildkanten auftreten können. Solche nachteiligen Bildartefakte können bei Bedarf dadurch vermieden werden, dass zur Berechnung eines Korrekturwertes für die Green-Green-Imbalance die Werte R1 und B1 durch andere Werte R2 und B2 ersetzt werden, wobei der Wert R2 unter Berücksichtigung der jeweiligen Phasenlage aus den Signalen der dem mittleren Pixel 236 in der Umgebung 131 am nächsten liegenden Rotpixel und der Wert B2 entsprechend unter Berücksichtigung der jeweiligen Phasenlage aus den Signalen der dem mittleren Pixel 236 am nächsten liegenden Blaupixel ermittelt wird.

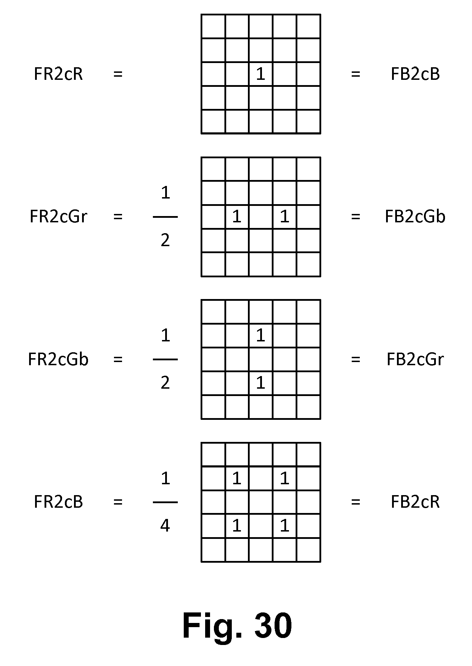

Fig. 30 zeigt beispielhafte Faltungsmatrizen zur Ermittlung der Werte R2 und B2 aus den dem mittleren Pixel 236 am nächsten liegenden Werten der jeweiligen Farbe. In der Phasenlage cR wird der Wert R2 mit der Faltungsmatrix FR2cR ermittelt und der Wert B2 mit der Faltungsmatrix FB2cR. Ferner werden in der Phasenlage cGr der Wert R2 mit der Faltungsmatrix FR2cGr und der Wert B2 mit der Faltungsmatrix FB2cGr ermittelt. In der Phasenlage cGb werden der Wert R2 mit der Faltungsmatrix FR2cGb und der Wert B2 mit der Faltungsmatrix FB2cGb ermittelt. Schließlich werden in der Phasenlage cB der Wert R2 mit der Faltungsmatrix FR2cB und der Wert B2 mit der Faltungsmatrix FB2cB ermittelt. Diese Art der Berechnung ist einfach und ressourcensparend, insbesondere durch die in Fig. 30 aufgeführte und durch die Symmetrieeigenschaften des Bayer-Musters bedingte Gleichheit der Faltungsmatrizen FR2cR und FB2cB, der Faltungsmatrizen FR2cGr und FB2cGb, der Faltungsmatrizen FR2cGb und FB2cGr sowie der Faltungsmatrizen R2cB und B2cR.

In den vorangegangenen und nachfolgenden Ausführungsbeispielen wird jeweils die Multiplikation mit den Werten RXG und BXG bei den Werten R1 und B1 durchgeführt. Sie kann aber ebenso bei den Werten R2 und B2 angewendet werden.

Die Korrektur der Werte GScG und GScRB bezüglich der Green-Green-Imbalance kann zu einem weiteren nachteiligen Bildartefakt führen, falls das Signal des räumlich mittleren Pixels 236 der Umgebung 131 den maximal möglichen Wert (beispielsweise für binäre 8-Bit-Zahlen den Wert 255) annimmt, also gesättigt ist. Liegen beispielsweise in der Umgebung 131 nur gesättigte Werte vor, so sind im Allgemeinen die Werte für GScG und GScRB null, da innerhalb der Umgebung 131 keine sich ändernde Bildstruktur vorliegt. Es kann dann vorkommen, dass in mindestens einer Phasenlage in den Verknüpfungsgliedern 234 oder 235 eine Subtraktion eines positiven Wertes aus dem Subtrahierer 232 vorgenommen wird, so dass im Ergebnis in der Auswähleinheit 221 eine negative Strukturinformation ausgewählt wird, wodurch im Ergebnisbild eine nachteilige Geisterstruktur in Form eines regelmäßigen Punktgitters zu erkennen ist, die ein unerwünschtes Artefakt darstellt.

Dieses Problem kann dadurch gelöst werden, dass ein logischer Wert CCmax bestimmt wird, der anzeigt, ob das Signal des zentralen Pixels 236 gesättigt ist. Anhand dieses logischen Werts CCmax erfolgt eine Auswahl in einer weiteren Auswahleinheit 233, ob den Verknüpfungsgliedern 234 und 235 ein Wert "0" zugeführt wird (mittlerer Pixel 236 gesättigt) oder das Ergebnis des Subtrahierers 232 (mittlerer Pixel 236 nicht gesättigt). Selbstverständlich kann an Stelle der Auswahleinheit 233 vom Wert CCmax abhängige Addition oder Subtraktion in den Verknüpfungsgliedern 234 bzw. 235 vorgesehen sein. Dadurch kann das oben geschilderte Problem mit geringem Aufwand gelöst und die nachteiligen Bildartefakte vermieden werden.

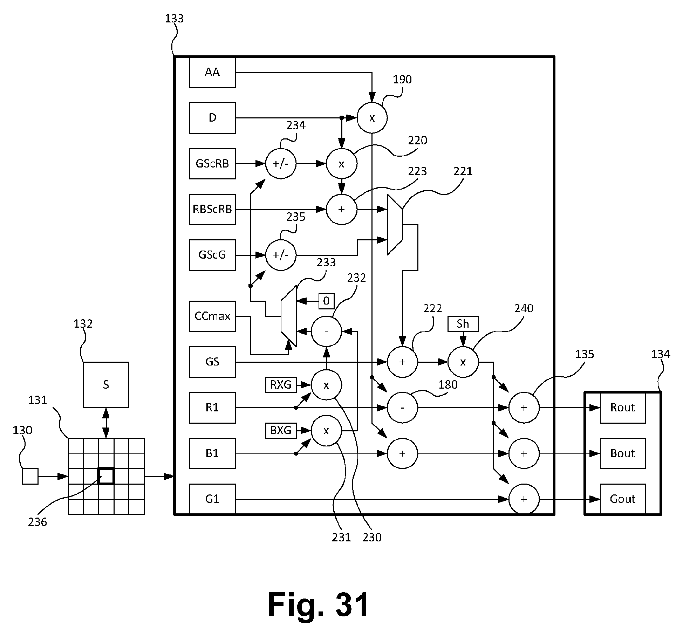

Fig. 31 zeigt ein schematisches Ablaufdiagramm einer Rekonstruktion von Farbkomponenten mit verbesserter Bildschärfe gemäß einem sechsten Ausführungsbeispiel.

Häufig ist eine weitere Verbesserung der Bildschärfe erwünscht. Dies wird im vorliegenden sechsten Ausführungsbeispiel durch Multiplikation der summierten Strukturinformation am Ausgang des Addierers 222 mit einem Wert Sh in einem Multiplizierer 240 erreicht. Ist der Wert von Sh größer als eins, führt dies dazu, dass in den Addierern 135 eine verstärkte Strukturinformation zu den Farbwerten R1, G1 und B1 addiert wird. Die verstärkte Strukturinformation lässt das Bild vorteilhaft schärfer erscheinen und hebt Details hervor. Falls ein Bild aufgenommen werden soll, welches nur wenige scharfe Details aufweist, kann mit einem Wert für Sh von 0 ≤ Sh < 1 der Anteil der Struktur im Bild verringert werden. Bei stark verrauschten Bildern kann dies zu einer als vorteilhaft wahrgenommenen Verringerung des unbunten Rausehens führen. Unbuntes Rauschen ist Rauschen, welches im Farbraum in einer Richtung erfolgt, die parallel zur Unbuntheitsgerade liegt. Wird Sh auf eins gesetzt, erfolgt keine mit Sh verbundene Änderung des Bildes.

Natürlich können die Strukturinformationen auch vor der Addition in dem Addierer 222 mit dem Wert Sh multipliziert werden. Dabei sind dann aber mehrere Multiplikationen erforderlich.

Es kann auch ein Bedienelement zur Einstellung des Wertes Sh vorgesehen sein. Es ist grundsätzlich möglich, das Bedienelement direkt an der Kamera vorzusehen. Es ist auch möglich ein Register zur Einstellung des Wertes Sh vorzusehen, durch welches ein Programm oder ein Benutzer den Wert Sh über eine elektronische Schnittstelle einstellen kann. Es ist weiterhin möglich, ein Computerprogramm vorzusehen, durch welches ein Benutzer den Wert von Sh eingeben oder einstellen kann, z.B. mit Hilfe eines Eingabefeldes oder eines in Software ausgeführten Schiebe- oder Drehreglers. Durch das Bedienelement kann der Benutzer, sei es ein Mensch oder ein Computerprogramm, Einfluss nehmen auf die Bildschärfe und einen gewünschten Arbeitspunkt für das Bild wählen.

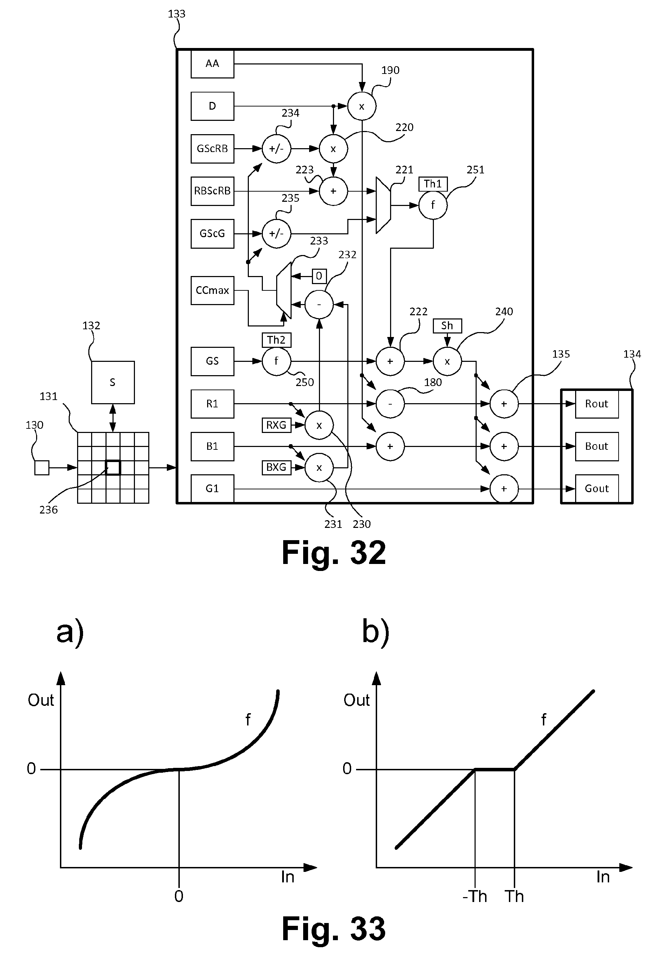

Fig. 32 zeigt ein schematisches Ablaufdiagramm einer Rekonstruktion von Farbkomponenten mit Denoising gemäß einem siebten Ausführungsbeispiel.

Wie bereits erwähnt kann im Farbbild gemäß den vorangegangenen Ausführungsbeispielen vor allem unbuntes Rauschen auftreten, welches hier als Graurauschen bezeichnet wird, da das Buntrauschen bereits in den vorgenannten Ausführungsbeispielen erheblich reduziert wurde. Das Graurauschen wird im siebten Ausführungsbeispiel dadurch verringert, dass die Strukturinformation GS einer ersten nichtlinearen Funktion (f) 250 mit einem ersten Einstellwert Th2 unterzogen wird und die zweite Strukturinformation am Ausgang der Auswahleinheit 221 einer zweiten nichtlinearen Funktion (f) 251 mit einem zweiten Einstellwert Th1 unterzogen wird. Die Ergebnisse am Ausgang der beiden nichtlinearen Funktionen 250, 251 werden dem Addierer 222 zugeführt, so dass eine rauscharmen Strukturinformation erhalten wird. Dadurch kann vor allem das als besonders störend empfundene Rauschen in glatten Flächen verringert werden.

Die Figuren 33a und 33b zeigen Diagramme mit beispielhaften nichtlinearen Funktionen zur Reduktion des Rauschens in der Strukturinformation. Die nichtlineare Funktion f kann eine stetige Funktion sein, die durch den Koordinatenursprung (0;0) verläuft, fortlaufend konstant oder monoton steigend ist, wobei die Steigung im Ursprung geringer ist, als an mindestens einer Stelle, die vom Ursprung entfernt ist. Fig. 33a zeigt eine solche beispielhafte Funktion. Eine Skalierung mit einem Parameter Th kann hier beispielsweise dadurch vorgenommen werden, dass die Funktion auf das Produkt der Eingangsgröße mit dem Parameter Th angewendet wird.

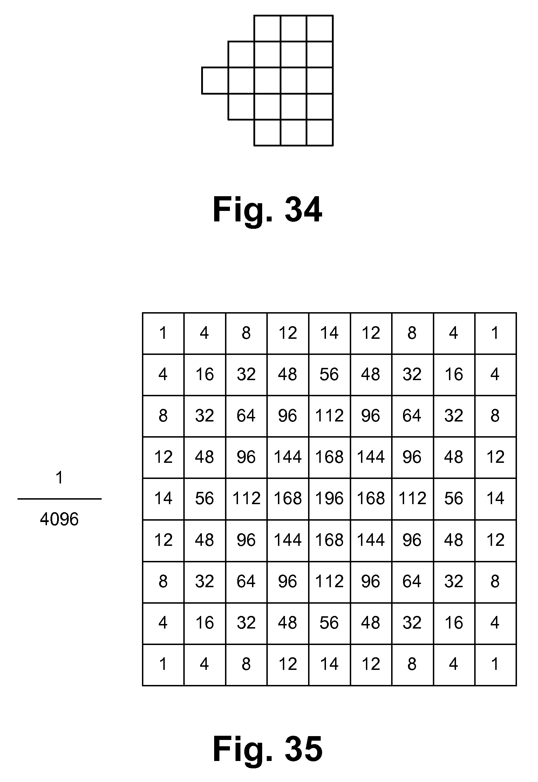

Solche nichtlinearen Funktionen lassen in einem FPGA mit besonders geringem Ressourcenbedarf realisieren, wenn sie stückweise linear sind. Die vorgenannte nichtlineare Funktion kann daher als stückweise lineare Funktion gemäß Fig. 34b angenähert werden. Diese Funktion ist unterhalb eines Wertes -Th linear (bspw. mit der Steigung 1), zwischen den Werten -Th und Th konstant 0 und oberhalb des Wertes Th wiederum linear (bspw. mit der Steigung 1).

Dem Einsatz einer solchen nichtlinearen Funktion liegt die Erkenntnis zugrunde, dass die Strukturwerte des Bildes mit einem Rauschen mit einer gewissen Rauschamplitude behaftet sind. Es ist daher vorteilhaft, innerhalb der Rauschamplitude (d.h. zwischen den Werten -Th und Th) liegende Werte einer Funktion zu unterwerfen, die das Rauschen verringert. Gemäß der Lehre der Fehlerfortpflanzung nach Karl Friedrich Gauss wird Rauschen, welches als Messfehler eines Pixels aufgefasst werden kann, dann vermindert, wenn die erste Ableitung einer auf die rauschbehaftete Größe angewandten Funktion betragsmäßig klein ist. Daher ist es vorteilhaft, wenn der Betrag der Steigung der Funktion f nahe am Ursprung, also innerhalb der Rauschamplitude, klein ist. Insbesondere ist es vorteilhaft, wenn der Betrag der Steigung der Funktion f nahe am Ursprung und innerhalb der Rauschamplitude Null ist und der Betrag der Funktion f dort selbst auch Null ist, weil die nichtlineare Funktion f das Rauschen dann innerhalb der Rauschamplitude unterdrückt. Dabei werden solche Bildstrukturen, deren Betrag unterhalb der Rauschamplitude liegen, ebenfalls aus dem Bild entfernt. Da solche Strukturen ohnehin kaum erkennbar sind, führt dies jedoch zu keiner nennenswerten Beeinträchtigung der Bildqualität.

In Analogie zum Bedienelement für Sh können Bedienelemente zur Einstellung der Werte von Th1 und Th2 vorgesehen werden. Weiterhin kann durch Anwendung der Lehre der Fehlerfortpflanzung auf das Errechnen der ersten und zweiten Strukturinformation das theoretische Verhältnis der unterschiedlichen Rauschamplituden bestimmt werden. Um die Bedienung zu vereinfachen, ist es daher vorteilhaft, die Einstellung der Werte Th1 und Th2 über daraus errechnete feste Faktoren miteinander zu koppeln und nur ein Bedienelement für einen Wert Th zur Verfügung zu stellen, der wiederum mit den Werten Th1 und Th2 über feste Faktoren gekoppelt ist. Es kann also ein Bedienelement zur Einstellung des Wertes Th vorgesehen sein. Dieses Bedienelement kann direkt an der Kamera vorgesehen sein. Es ist auch möglich ein Register zu Einstellung des Wertes Th vorzusehen, durch welches ein Programm oder ein Benutzer den Wert Th über eine elektronische Schnittstelle einstellen kann. Es ist weiterhin möglich, ein Computerprogramm vorzusehen, durch welches ein Benutzer den Wert von Th eingeben oder einstellen kann, z.B. mit Hilfe eines Eingabefeldes oder eines in Software ausgeführten Schiebe- oder eines Drehreglers. Durch das Bedienelement kann der Benutzer, sei es ein Mensch oder ein Computerprogramm, das Denoising steuern und einen gewünschten Arbeitspunkt einstellen.

Gemäß der Lehre der EMVA1288 ist die Rauschamplitude eines Bildsensors abhängig vom Helligkeitswert. Es wird dort angenommen, dass sich das Rauschen eines Bildsensors aus einem konstanten elektrischen Rauschen und dem lichtmengenabhängigen Photonenrauschen zusammensetzt. Dadurch ist die Rauschamplitude in dunklen Partien eines Bildes grundsätzlich geringer als in hellen Partien eines Bildes. Durch Kenntnis der sensorabhängigen Größen für das Dunkelrauschen (Dark Noise), und die Wandlungsverstärkung (Conversion Gain) kann gemäß eines Modells eine für die vorliegende Helligkeit anzunehmende Rauschamplitude errechnet und als Wert Th zur Bestimmung von Th1 und Th2 herangezogen werden. Dadurch werden die Werte Th1 und Th2 in dunklen Partien des Bildes kleiner gewählt, als in hellen Partien des Bildes. Dies hat den Vorteil, dass aus dunklen Partien des Bildes, wo auch weniger Rauschen vorliegt, weniger wertvolle Strukturinformation des Bildes entfernt wird. Weiterhin hat dies den Vorteil, dass ein geeigneter Wert Th gewählt wird, ohne dass der Benutzer diesen manuell oder automatisiert einstellen muss.

Zahlreiche der in den Ausführungsbeispielen vorgeschlagenen Faltungsmatrizen auf weisen systematische Ähnlichkeiten auf. Beispielsweise ergibt sich die Faltungsmatrix FG1cGr aus dem Mittelwert der Faltungsmatrizen FR1cR und FB 1 cR. Da es im Allgemeinen ressourcensparender ist, einen Mittelwert aus zwei vorher ermittelten Werten zu berechnen, als eine Faltungsmatrix auf eine Umgebung anzuwenden, können solche systematischen Ähnlichkeiten ausgenützt werden, um den Rechen- und damit den Ressourcenaufwand weiter zu verringern.

Weiterhin lässt sich der Speicher- und Rechenaufwand beim progressivem Auslesen durch geschicktes Ausnutzen der zeitlichen und räumlichen Zusammenhänge verringern, so dass weitere Ressourceneinsparungen möglich sind. Werden die horizontalen Pixel von rechts nach links so übertragen, dass innerhalb der Übermittlung einer Zeile und unter Vernachlässigung der Probleme am Randbereich mit jedem Takt ein Pixel übermittelt wird, so rücken innerhalb der Umgebung die Werte mit jedem Takt eine Position nach links. Soll beispielsweise die Faltungsmatrix FB1cGr verwendet und ein Ergebnis für die Faltung ermittelt werden, so kann in einem ersten Takt ein Mittelwert der rechten beiden in der Faltungsmatrix mit einer "1" versehenen Pixel erfolgen. Das Ergebnis Avg11_1 kann dann in einem zweiten, einem dritten, einem vierten und einem fünften Takt als Ag11_2, Ag11_3, Avg11 4 und Ag11_5 zwischengespeichert werden. Im dritten Takt entspricht das Ergebnis dann dem Mittelwert der rechten beiden mittleren mit einer "2" versehenen Pixel und im fünften Takt den beiden rechten mit einer "1" versehenen Pixel. Somit kann der Wert B1cGr, der durch Anwendung der Faltungsmatrix FB1cGr erhalten wird, als (Avg11_1 + 2* Avg11_3 + Ag11_5)/4 ermittelt werden. Weiterhin kann im selben Zuge und aus denselben zwischengespeicherten Werten der Wert B1cR, der durch Anwendung der Faltungsmatrix FB1cR erhalten wird, als (Avg11_2 + Ag11_4)/2 ermittelt werden. Durch diese und zahlreiche andere Zusammenfassungen reduziert sich die Anzahl der durchzuführenden Rechenoperationen deutlich, wodurch zur Berechnung weniger Ressourcen eingesetzt werden müssen.

Fig. 34 zeigt eine schematische Darstellung eines Beispiels für eine reduzierte Umgebung. Durch die vorgenannten Maßnahmen ist es nicht mehr erforderlich, alle Werte der Umgebung zu speichern. Fig. 34 zeigt, welche Werte für den Fall einer 5x5-Umgebung tatsächlich benötigt werden, um die mathematischen Bildverarbeitungsprozesse gemäß den vorgenannten Ausführungsbeispielen realisieren zu können. Dadurch lassen sich auf vorteilhafte Weise weitere Ressourcen einsparen.

Durch die erfindungsgemäße Lösung gemäß den vorstehend beschriebenen Ausführungsbeispielen mit monolithischen mathematischen Bildverarbeitungsprozessen wird es

erstmals möglich, eine Lösung der Aufgabe in solchen Kameras anzubieten, welche bspw. über ein einfacheres FPGA mit limitierten Ressourcen, insbesondere internem Speicher, dem sogenannten embedded RAM, verfügen. Kameras mit einem solchen FPGA können effizient und mit geringerem Herstellungsaufwand produziert werden.

Die vorgeschlagenen Bildverarbeitungsprozesse sind auch in Kameras einsetzbar, in deren Recheneinheit als zentrales Bauteil kein FPGA sondern ein DSP verwendet wird. Die in den Ausführungsbeispielen für die Recheneinheit einer Kamera geschilderten mathematischen Bildverarbeitungsprozesse können für den Fall, dass aus der Kamera Rohdaten direkt übertragen werden, auch in einem Frame Grabber oder in einem Prozessor eines Computers eingesetzt werden, insbesondere unter Verwendung einer die entsprechenden Prozessschritte steuernden Software, z.B. eines Treibers.

Es ist auch möglich, den aus den Farbkomponenten Rout, Gout und Bout bestehenden Ergebnisfarbwert in Farbwerte eines anderen Farbraumes, beispielweise in Farbkomponenten Y, U, V eines Farbwertes des YUV-Farbraums, umzurechnen. Es ist weiterhin möglich, diese nachgelagerte Umrechnung auch in die monolithische mathematische Bildverarbeitung an früherer Stelle zu integrieren.

Ferner ist es dem Fachmann möglich, die hier dargelegte Lehre auf Kameras zu übertragen, deren Bildsensoren mit anderen Farbmustern (z.B. Mosaikfiltern) ausgestattet sind, welche die Farben Rot, Grün und Blau in einer anderen Anordnung oder mehr oder andere Farben als Rot, Grün und Blau aufweist. Solche Mosaikfilter werden beispielsweise in US 5,631,703, US 5,251,019, US 6,330,029B1 und US 7,057,654 B2 beschrieben. Werden beispielsweise drei andere Farben als Rot, Grün und Blau verwendet, so können diese drei anderen Farben mathematisch so behandelt werden, wie dies hier für Rot, Grün und Blau dargelegt ist. Dabei ist es möglich, die Strukturinformation auch aus einer anderen Farbe als Grün zu gewinnen, vorzugsweise aus einer solchen Farbe, die im Farbfilter besonders häufig vertreten ist.

Werden beispielsweise vier oder mehr Farben verwendet wie in der US 6,330,029, so ist die hier dargelegte Lehre für Rot, Grün und Blau auf die verwendeten vier Farben zu übertragen und dabei um eine weitere Farbe zu erweitern. In diesem Fall ist es zweckmäßig die erste und zweite grüne Strukturinformation nicht nur aus Werten der Farbe Grün zu errechnen, sondern aus einer Kombination von Farben, wie dies beispielweise in der DE102010052438A1 erklärt ist.

Auch sind Farbfilter bekannt, die die Farben Rot, Grün, Blau und Weiß aufweisen. Zur Anwendung der hier genannten Lehre wird dabei empfohlen, die Strukturinformation aus den Weißpixeln zu gewinnen, da die Farbe Weiss ein besonders günstiges Signal-Rausch-Verhältnis aufweist.

Zur Anwendung der hier genannten Lehre auf Farbfilter, deren räumliche Periode einen Wert von zwei Pixel, wie beispielsweise bei der Bayer-Matrix, übersteigt, kann es erforderlich sein, eine größere Umgebung als eine 5x5-Umgebung zu verwenden, damit sichergestellt sind, dass für jede Farbe jeweils mehrere Pixel in der Umgebung vorkommen sowie die notwendigen Symmetrieeigenschaften eingehalten werden.

Ausgehend von einem größeren Grundfilter GF kann die monolithische mathematische Methode auch für größere Umgebungen als 5x5 formuliert werden, beispielsweise für 7x7, 9x9, 15x15 oder 31x31. Dadurch lässt sich einerseits die Bildqualität verbessern, andererseits steigen damit aber auch der Speicherbedarf und der Rechenaufwand und damit der Ressourcenbedarf.

Fig. 35 zeigt ein Beispiel für einen Grundfilter für eine 9x9-Umgebung. Der Grundfilter GF ist hier als Faltungsmatrix angegeben, anhand derer die Berechnung der weiteren Faltungsmatrizen erfolgen kann.

Die vorgeschlagenen monolithischen mathematischen Bildverarbeitungsprozesse weisen mehrere Aspekte auf, die mehrere, verschiedene Probleme adressieren. Je nach Anwendung kann es vorteilhaft sein, auf gewisse mit einem Aspekt verbundenen Prozessschritte zu verzichten. So ist beispielsweise denkbar, einen solchen Bildsensor einzusetzen, der keine nennenswerte Green-Green-Imbalance aufweist. In einem solchen Fall kann auf die Korrektur der Green-Green-Imbalance und somit auf das Ermitteln der Werte RXG und BXG, auf die Multiplizierer 230 und 231, auf den Subtrahierer 232, auf die Ermittlung des Wertes CCmax und die Auswahleinheit 233 sowie auf die Verknüpfungsglieder 234 und 235 verzichtet werden. Durch einen solchen Verzicht kann der Rechenaufwand verringert werden und damit werden weniger Ressourcen benötigt, wobei eine mögliche Erhöhung des Rauschens durch die entfallenen Prozessschritte vermieden wird.

Es ist beispielsweise auch denkbar, dass die digitale Kamera eine deutlich höhere Pixelzahl aufweist, als deren Optik optisch auflösen kann. In einem solchen Fall ist es häufig günstig, auf die zweite Strukturinformation GS2, deren feine Struktur von der Optik gar nicht abgebildet werden kann, zu verzichten und damit auf die Berechnung der Werte GScRB, RBSeRB und GScG, auf den Multiplizierer 220, den Addierer 223, die Auswahleinheit 221, die Anwendung der nichtlinearen Funktion 251 und den Addierer 222. Darüber hinaus kann auch in diesem Fall ebenfalls auf die vorgenannten Prozessschritte zur Korrektur der Green-Green-Imbalance verzichtet werden. Auch hierdurch werden der Rechenaufwand reduziert und Ressourcen eingespart. Weiterhin ergibt sich durch den Verzicht eine vorteilhafte Reduktion des Bildrauschens, welche sich mit dem Wegfall des Rauschbeitrages durch die Fehlerfortpflanzung in den Prozessschritten zur Berechnung der zweiten Strukturinformation erklärt.

Ferner ist auch denkbar, dass sich bei einer Kamera oder in einer Anwendung einer solchen Kamera keine relevanten Probleme mit Farb-Aliasing ergeben.

Dann kann auf die Berechnung des Werts AA und auf den Multiplizierer 190 verzichtet werden. Auch hierdurch werden auf vorteilhafte Weise der Rechenaufwand reduziert und Ressourcen eingespart.

Auch ist denkbar, dass keine Bildschärfung vorgenommen werden soll. In diesem Fall kann der Multiplizierer 240 mit den vorgenannten Vorteilen eingespart werden.

Ebenso ist auch denkbar, dass andere Aspekte der monolithischen mathematischen Bildverarbeitungsprozesse eingespart werden können. Dann bilden die verbleibenden Aspekte einen mathematischen Bildverarbeitungsprozess mit zumeist geringerem Rechenaufwand und Ressourcenbedarf.

Die vorgestellten Lösungsalternativen gemäß den Ausführungsbeispielen können im Zusammenhang mit verschiedensten Bildaufnahmegeräten und Kameras mit Bayer-Muster oder ähnlichen Filterstrukturen eingesetzt werden.

Zusammenfassend wurde eine Bildverarbeitungsvorrichtung beschrieben zur Verarbeiten von Bilddaten, die aus einer digitalen Kamera mit einem Bildsensor mit einer regelmäßigen Bildpunktanordnung und einem zugeordneten Farbfilter mit Bayer-Muster gewonnen werden, wobei die Bildverarbeitungsvorrichtung ausgestaltet ist, alle Bildverarbeitungsoperationen unter Verwendung von Bilddaten aus einer einzigen vorbestimmten und mehrere Bildpunkte umfassenden Umgebung in Bezug auf einen betrachten Bildpunkt durchzuführen.

## Patentansprüche

1. Bildverarbeitungsvorrichtung zum Verarbeiten von Bilddaten aus einem Bildsensor (31) mit einer regelmäßigen Bildpunktanordnung und einem zugeordneten Farbfilter mit Bayer-Muster mit einer ersten Farbkomponente Grün, einer zweiten Farbkomponente Rot und einer dritten Farbkomponente Blau, wobei die Bildverarbeitungsvorrichtung ausgestaltet ist, Bildverarbeitungsoperationen unter Verwendung von Bilddaten aus einer festen und mehrere Bildpunkte umfassenden Umgebung (131) in Bezug auf einen betrachteten Bildpunkt (130) durchzuführen, wobei die Bildverarbeitungsoperationen ausgestaltet sind, eine Verschiebung des Farbwertes parallel zu einer Unbuntheitsgeraden des Farbraumes durch Addition eines identischen Strukturwertes (GS) zu sämtlichen Farbkomponenten (R1, G1, B1) der Bilddaten durchzuführen, und wobei die Bildverarbeitungsoperationen ausgestaltet sind, basierend auf Bilddaten der ersten Farbkomponente Grün der Umgebung (131) einen Korrekturwert (DAA) zu ermitteln und diesen mit jeweils unterschiedlichem Vorzeichen zu den Bilddaten der zweiten Farbkomponente Rot und der dritten Farbkomponente Blau zu addieren (188).

2. Bildverarbeitungsvorrichtung nach Anspruch 1, wobei die feste Umgebung (131) ein quadratischer Ausschnitt mit mindestens fünf Zeilen und fünf Spalten der regelmäßigen Bildpunktanordnung ist.

3. Bildverarbeitungsvorrichtung nach Anspruch 1, wobei die Bildverarbeitungsoperationen ausgestaltet sind, den Korrekturwert durch Multiplikation eines durch Faltung der Bilddaten der ersten Farbkomponente Grün mittels vorbestimmter Faltungsmatrizen ermittelten Wertes (AA) mit einem von einer Vorzugsrichtung der Bildstruktur abhängigen Richtungsschätzwert (D) zu ermitteln.

4. Bildverarbeitungsvorrichtung nach Anspruch 3, wobei die Bildverarbeitungsvorrichtung ausgestaltet ist, den durch Faltung der Bilddaten der ersten Farbkomponente Grün ermittelten Wert (AA) durch Faltungsoperationen zu ermitteln, bei denen Zeilen und Spalten der Faltungsmatrizen mit jeweils alternierendem Vorzeichen eingehen.

5. Bildverarbeitungsvorrichtung nach Anspruch 3, wobei die Bildverarbeitungsoperationen ausgestaltet sind, den Richtungsschätzwert (D) auf Grundlage einer Differenz von Helligkeitsänderungen in horizontaler und vertikaler Richtung und unter Anwendung von Faltungsmatrizen auf die Differenzen horizontaler und vertikaler Nachbarbildpunkte in der Umgebung (131) und Vergleich der erhaltenen Ergebnisse zu ermitteln.

6. Bildverarbeitungsvorrichtung nach Anspruch 5, wobei die Faltungsmatrizen so ausgestaltet sind, dass bei horizontal benachbarten Phasen lagen für jede Zeile und für jede Farbe die Zeilensumme der dieser Farbe zugehörenden Faltungsmatrixelemente gleich ist und dass bei vertikal benachbarten Phasenlagen für jede Spalte und für jede Farbe die Spaltensumme der dieser Farbe zugehörenden Faltungsmatrixelemente gleich ist.

7. Bildverarbeitungsvorrichtung nach einem der vorgenannten Ansprüche, wobei die Bildverarbeitungsoperationen ausgestaltet sind, eine Green-Green-Imbalance durch Verrechnen eines Korrekturterms (RXG, BXG) mit einer aus Bilddaten einer vorbestimmten Farbkomponente in der Umgebung (131) ermittelten Strukturinformation zu korrigieren.

8. Bildverarbeitungsvorrichtung zum Verarbeiten von Bilddaten aus einem Bildsensor (31) mit einer regelmäßigen Bildpunktanordnung und einem zugeordneten Farbfilter mit Bayer-Muster, wobei die Bildverarbeitungsvorrichtung ausgestaltet ist, Bildverarbeitungsoperationen unter Verwendung von Bilddaten aus einer festen und mehrere Bildpunkte umfassenden Umgebung (131) in Bezug auf einen betrachteten Bildpunkt (130) durchzuführen, wobei die Bildverarbeitungsoperationen ausgestaltet sind, eine erste nichtlineare Funktion (250) mit einem ersten Einstellwert (Th2) auf eine erste aus Bilddaten einer vorbestimmten Farbkomponente in der Umgebung (131) ermittelte Strukturinformation anzuwenden, eine zweite nichtlineare Funktion (251) mit einem zweiten Einstellwert (Th1) auf eine zweite aus Bilddaten der vorbestimmten Farbkomponente in der Umgebung (131) ermittelte Strukturinformation anzuwenden, und die Ergebnisse der ersten und zweiten nichtlinearen Funktionen zu addieren, um eine rauscharme Strukturinformation zu erhalten, und wobei die Bildverarbeitungsoperationen ausgestaltet sind, eine Verschiebung des Farbwertes parallel zu einer Unbuntheitsgeraden des Farbraumes durch Addition (135) der rauscharmen Strukturinformation (GS) zu sämtlichen Farbkomponenten (R1, G1, B1) der Bilddaten durchzuführen.

9. Bildverarbeitungsvorrichtung nach Anspruch 8, wobei die Bildverarbeitungsoperationen ausgestaltet sind, die zweite Strukturinformation bei einer Phasenlage cG mit mittlerem grünen Pixel des Bayer-Musters als grüne Strukturinformation GScG zu ermitteln und bei einer Phasenlage cRB mit mittlerem roten oder blauen Pixel des Bayer-Musters mittels Schätzung unter Einbeziehung eines Richtungsschätzwerts (D) zu ermitteln.

10. Bildverarbeitungsvorrichtung nach einem der vorgenannten Ansprüche, wobei die Bildverarbeitungsoperationen ausgestaltet sind, eine Bildschärfung durch Multiplikation einer aus Bilddaten einer vorbestimmten Farbkomponente in der Umgebung (131) ermittelte Strukturinformation mit einem Korrekturwert (Sh) durchzuführen.

11. Digitalkamera mit einer Bildverarbeitungsvorrichtung nach einem der Ansprüche 1 bis 10.

12. Bildverarbeitungsvorrichtung nach einem der Ansprüche 1 bis 10, ausgestaltet zum Anschießen an eine den Bildsensor (31) aufweisende digitale Kamera.

13. Bildverarbeitungsverfahren zum Verarbeiten von Bilddaten aus einem Bildsensor (31) mit einer regelmäßigen Bildpunktanordnung und einem zugeordneten Farbfilter mit Bayer-Muster mit einer ersten Farbkomponente Grün, einer zweiten Farbkomponente Rot und einer dritten Farbkomponente Blau, wobei das Bildverarbeitungsverfahren ausgestaltet ist, Bildverarbeitungsschritte unter Verwendung von Bilddaten aus einer vorbestimmten und mehrere Bildpunkte umfassenden Umgebung (131) in Bezug auf einen betrachten Bildpunkt (130) durchzuführen, wobei die Bildverarbeitungsoperationen eine Verschiebung des Farbwertes parallel zu einer Unbuntheitsgeraden des Farbraumes durch Addition eines identischen Strukturwertes (GS) zu sämtlichen Farbkomponenten (R1, G1, B1) der Bilddaten durchführen, und wobei die Bildverarbeitungsoperationen basierend auf Bilddaten der ersten Farbkomponente Grün der Umgebung (131) einen Korrekturwert (DAA) ermitteln und diesen mit jeweils unterschiedlichem Vorzeichen zu den Bilddaten der zweiten Farbkomponente Rot und der dritten Farbkomponente Blau addieren.

14. Bildverarbeitungsverfahren zum Verarbeiten von Bilddaten aus einem Bildsensor (31) mit einer regelmäßigen Bildpunktanordnung und einem zugeordneten Farbfilter mit Bayer-Muster, wobei das Bildverarbeitungsverfahren ausgestaltet ist, Bildverarbeitungsschritte unter Verwendung von Bilddaten aus einer vorbestimmten und mehrere Bildpunkte umfassenden Umgebung (131) in Bezug auf einen betrachten Bildpunkt (130) durchzuführen, wobei die Bildverarbeitungsoperationen eine erste nichtlineare Funktion (250) mit einem ersten Einstellwert (Th2) auf eine erste aus Bilddaten einer vorbestimmten Farbkomponente in der Umgebung (131) ermittelte Strukturinformation anwenden, eine zweite nichtlineare Funktion (251) mit einem zweiten Einstellwert (Th1) auf eine zweite aus Bilddaten der vorbestimmten Farbkomponente in der Umgebung (131) ermittelte Strukturinformation anwenden, und die Ergebnisse der ersten und zweiten nichtlinearen Funktionen addieren, um eine rauscharme Strukturinformation zu erhalten.

15. Computerprogramm zum Speichern auf einem Datenträger und zum Veranlassen einer Computervorrichtung zum Ausführen des Bildverarbeitungsverfahrens nach Anspruch 13 oder 14, wenn das Computerprogramm auf der Computervorrichtung ausgeführt wird.

## Claims

1. An image processing device for processing image data from an image sensor (31) with a regular pixel arrangement and an associated color filter with Bayer pattern having a first color component green, a second color component red, and a third color component blue, wherein the image processing device is adapted to carry out image processing operations by using image data from a fixed environment (131) comprising several pixels with respect to a pixel of interest (130), wherein the image processing operations are adapted to perform a shift of the color value parallel to a non-color line of the color space by addition of an identical structural value (GS) to all color components (R1, G1, B1) of the image data, and wherein the image processing operations are adapted to determine based on image data of the first color component green of the environment (131) a correction value (DAA) and to add (188) it to the image data of the second color component red and the third color component blue with a different respective sign.

2. The image processing device according to claim 1, wherein the fixed environment (131) is a quadratic section of at least five rows and five columns of the regular pixel arrangement.

3. The image processing device according to claim 1, wherein the image processing operations are adapted to determine the correction value by multiplication of a value (AA) determined by convolution of the image data of the first color component green by predetermined convolution matrices, by a direction estimation value (D) which depends on a predominant direction of the image structure.

4. The image processing device according to claim 3, wherein the image processing operations are adapted to determine the value (AA), determined by convolution of the image data of the first color component green, by convolution operations in which rows and columns of the convolution matrices are taken into account at respective alternating signs.

5. The image processing device according to claim 3, wherein the image processing operations are adapted to determine the direction estimation value (D) based on a difference of changes in brightness in horizontal and vertical directions and by application of convolution matrices on the differences of horizontally and vertically neighboring pixels in the environment (131) and comparison of the results obtained.

6. The image processing device according to claim 5, wherein the convolution matrices are adapted so that in case of horizontally neighboring phase relationships for each row and for each color the row sum of the matrix elements belonging to this color is equal and that in case of vertically neighboring phase relationships for each column and for each color the column sum of the matrix elements belonging to this color is equal.

7. The image processing device according to any one of the preceding claims, wherein the image processing operations are adapted to correct a green-green imbalance by offsetting a correction term (RXG, BXG) against a structural information determined from image data of a predetermined color component in the environment (131).

8. An image processing device for processing image data from an image sensor (31) with a regular pixel arrangement and an associated color filter with Bayer pattern, wherein the image processing device is adapted to carry out image processing operations by using image data from a fixed environment (131) comprising several pixels with respect to a pixel of interest (130), wherein the image processing operations are adapted to apply a first non-linear function (250) having a first setting value (Th2) on a first structural information determined from image data of a first color component in the environment (131), a second non-linear function (251) having a second setting value (Th1) on a second structural information determined from image data of the predetermined color component in the environment (131), and to add the results of the first and second non-linear functions to obtain a low-noise structural information, and wherein the image processing operations are adapted to perform a shift of the color value parallel to a non-color line of the color space by addition (135) of the low-noise structural value (GS) to all color components (R1, G1, B1) of the image data.

9. The image processing device according to claim 8, wherein the image processing operations are adapted to determine the second structural information at a phase relationship cG with a central green pixel of the Bayer pattern as green structural information GScG and at a phase relationship cRB with a central red or blue pixel of the Bayer pattern by an estimation incorporating a direction estimation value (D).

10. The image processing device according to any one of the preceding claims, wherein the image processing operations are adapted to perform an image sharpening by multiplication of a structural information determined from image data of a predetermined color component in the environment (131) by a correction value (Sh).

11. A digital camera comprising an image processing device according to any one of claims 1 to 10.

12. An image processing device according to any one of claims 1 to 10, adapted to connect to a digital camera comprising the image sensor (31).

13. An image processing method for processing image data from an image sensor (31) having a regular pixel arrangement and an associated color filter with Bayer pattern having a first color component green, a second color component red, and a third color component blue, wherein the image processing method is adapted to carry out image processing steps by using image data from a predetermined environment (131) comprising several pixels with respect to a pixel of interest (130), wherein the image processing operations perform a shift of the color value parallel to a non-color line of the color space by addition of an identical structural value (GS) to all color components (R1, G1, B1) of the image data, and wherein the image processing operations determine based on image data of the first color component green of the environment a correction value (DAA) and add it to the image data of the second color component red and the third color component blue with a different respective sign.

14. An image processing method for processing image data from an image sensor (31) with a regular pixel arrangement and an associated color filter with Bayer pattern, wherein the image processing method is adapted to carry out image processing steps by using image data from a predetermined environment (131) comprising several pixels with respect to a pixel of interest (130), wherein the image processing operations apply a first non-linear function (250) having a first setting value (Th2) on a first structural information determined from image data of a predetermined color component in the environment (131), a second non-linear function (251) having a second setting value (Th1) on a second structural information determined from image data of the predetermined color component in the environment (131), and add the results of the first and second non-linear functions to obtain a low-noise structural information.

15. A computer program for storage on a data carrier and for causing a computer device to perform the image processing method according to claim 13 or 14 when the computer program is executed on the computer device.

## Revendications

1. Dispositif de traitement d'image pour traiter des données d'image d'un capteur d'image (31) ayant un ensemble de pixels régulier et un filtre de couleur associé ayant un modèle de Bayer avec une première composante couleur verte, une deuxième composante couleur rouge et une troisième composante couleur bleu, dans lequel ledit dispositif de traitement d'images est configuré pour procéder des opérations de traitement d'image en utilisant les données d'image à partir d'un environnement (131) fixe ayant un pluralité de pixel par rapport à un pixel considéré (130), dans lequel les opérations de traitement d'image sont configuré pour exécuter un décalage de la valeur de couleur en parallèle à une droite sans couleur de l'espace de couleur par l'addition d'une valeur de structure identique (GS) à toutes les composantes de couleur (R1, G1, B1) des données d'image, et dans lequel lesdits opérations de traitement d'image sont configurés pour déterminer une valeur de correction (DAA) sur la base des données d'image de la première composante couleur verte dans l'environnement (131) et pour l'additionner à la deuxième composante couleur rouge et la troisième composante couleur bleu respectivement avec des signes différents (188).

2. Dispositif de traitement d'image selon la revendication 1, dans lequel l'environnement (131) fixe est une découpe carrée ayant au moins cinq lignes et cinq colonnes de l'ensemble de pixels régulier.

3. Dispositif de traitement d'image selon la revendication 1, dans lequel les opérations de traitement d'image sont configurés pour déterminer la valeur de correction en multipliant une valeur (AA) déterminée par convolution des données d'image de la première composante couleur verte au moyen des matrices de convolution prédéterminées avec une valeur d'estimation de direction (D) dépendante d'une direction préférentielle de la structure d'image.

4. Dispositif de traitement d'image selon la revendication 3, dans lequel ledit dispositif de traitement d'image est configuré pour déterminer la valeur (AA) déterminée par convolution des données d'image de la première composante couleur verte au moyen des opérations de convolution, dans lesquelles les lignes et les colonnes des matrices de convolution avec respectivement singes alternés sont pris en considération.

5. Dispositif de traitement d'image selon la revendication 3, dans lequel les opérations de traitement d'image sont configurés pour déterminer la valeur d'estimation de direction (D) sur la base d'une différence des modifications de luminosité dans les directions horizontale et verticale et en utilisant des matrices de convolution sur les différences de pixels adjacents horizontales et verticales dans l'environnement (131) et pour comparer les résultats obtenus.

6. Dispositif de traitement d'image selon la revendication 5, dans lequel lesdits matrices de convolution sont configurés de façon que, si en cas de positions de phase adjacentes horizontales pour chaque ligne et pour chaque couleur le total des lignes des éléments du matrice de convolution correspondant à cette couleur est égal et si en cas de positions de phase adjacentes verticales pour chaque colonne et pour chaque couleur le total des colonnes des éléments du matrice de convolution correspondant à cette couleur est égal.

7. Dispositif de traitement d'image selon l'une quelconque des revendications précédentes, dans lequel les opérations de traitement d'image sont configurés pour corriger un vert-vert-déséquilibre en compensant un terme de correction (RXG, BXG) avec une information de structure déterminée des données d'image d'une composante couleur prédéterminée dans l'environnement (131).

8. Dispositif de traitement d'image pour traiter des données d'image d'un capteur d'image (31) ayant un ensemble de pixels régulier et un filtre de couleur associé ayant un modèle de Bayer, dans lequel ledit dispositif de traitement d'images est configuré pour procéder des opérations de traitement d'image en utilisant les données d'image d'un environnement (131) fixe ayant une pluralité de pixels par rapport à un pixel considéré (130), dans lequel les opérations de traitement d'image sont configuré pour appliquer une première fonction non-linéaire (250) avec une première valeur de réglage (Th2) à une première information de structure déterminée des données d'image d'une composante couleur prédéterminée dans l'environnement (131), pour appliquer une deuxième fonction non-linéaire (251) avec une seconde valeur de réglage (Th1) à une deuxième information de structure déterminée des données d'image de la composante couleur prédéterminée dans l'environnement (131), et pour additionner les résultats des premières et deuxièmes fonctions non linéaires afin d'obtenir une information de structure à faible bruit, et dans lequel lesdits opérations de traitement d'image sont configurés pour exécuter un décalage de la valeur de couleur en parallèle à une droite sans couleur de l'espace de couleur par l'addition (135) de la valeur de structure (GS) à faible bruit à toutes les composantes de couleur (R1, G1, B1) des données d'image.

9. Dispositif de traitement d'image selon la revendication 8, dans lequel les opérations de traitement d'image sont configurés pour déterminer la deuxième information de structure dans une position de phase cG avec un pixel verts central du modèle de Bayer comme l'information de structure verte GScG, et dans une position de phase cRB avec un pixel rouge ou bleu central du modèle de Bayer par une estimation en incluant une valeur d'estimation de direction (D).

10. Dispositif de traitement d'image selon l'une quelconque des revendications précédentes, dans lequel les opérations de traitement d'image sont configuré pour renforcer la netteté d'image en multipliant une information de structure déterminée par des données d'image d'une composante couleur prédéterminée dans l'environnement (131) avec une valeur de correction (Sh).

11. Caméra numérique avec un dispositif de traitement d'image selon l'une quelconque des revendications 1 à 10.

12. Dispositif de traitement d'image selon l'une des revendications 1 à 10, configuré pour connecter à une caméra numérique comprenant le capteur d'image (31).

13. Procédé de traitement d'image pour traiter des données d'image d'un capteur d'image (31) ayant un ensemble de pixels régulier et un filtre de couleur associé ayant un modèle de Bayer avec une première composante couleur verte, une deuxième composante couleur rouge et une troisième composante couleur bleu, dans lequel ledit procédé de traitement d'images est configuré pour procéder des étapes de traitement d'image en utilisant les données d'image à partir d'un environnement (131) fixe ayant un pluralité de pixel par rapport à un pixel considéré (130), dans lequel les opérations de traitement d'image exécutent un décalage de la valeur de couleur en parallèle à une droite sans couleur de l'espace de couleur par l'addition d'une valeur de structure identique (GS) à toutes les composantes de couleur (R1, G1, B1) des données d'image, et dans lequel lesdits opérations de traitement d'image déterminent une valeur de correction (DAA) sur la base des données d'image de la première composante couleur verte dans l'environnement (131) et l'additionnent à la deuxième composante couleur rouge et la troisième composante couleur bleu respectivement avec des signes différents.

14. Procédé de traitement d'image pour traiter des données d'image d'un capteur d'image (31) ayant un ensemble de pixels régulier et un filtre de couleur associé ayant un modèle de Bayer, dans lequel ledit procédé de traitement d'image est configuré pour procéder des étapes de traitement d'image en utilisant les données d'image à partir d'un environnement (131) fixe ayant un pluralité de pixel par rapport à un pixel considéré (130), dans lequel les opérations de traitement d'image appliquent une première fonction non-linéaire (250) avec une première valeur de réglage (Th2) à une première information de structure déterminée des données d'image d'une composante couleur prédéterminée dans l'environnement (131), appliquent une deuxième fonction non-linéaire (251) avec une seconde valeur de réglage (Th1) à une deuxième information de structure déterminée des données d'image de la composante couleur prédéterminée dans l'environnement (131), et additionnent les résultats des premières et deuxièmes fonctions non linéaires afin d'obtenir une information de structure à faible bruit.

15. Programme informatique pour être mémorisé sur un support de données et pour amener un dispositif informatique d'exécuter le procédé de traitement d'image selon l'une quelconque des revendications 13 ou 14, lorsque le programme informatique est exécuté sur le dispositif informatique.
